(19) Europäisches Patentamt
European Patent Office
Office européen des brevets

(11) **EP 4 593 377 A1**

(12) **EUROPEAN PATENT APPLICATION**
published in accordance with Art. 153(4) EPC

(43) Date of publication:
**30.07.2025 Bulletin 2025/31**

(21) Application number: 23868584.6

(22) Date of filing: **20.09.2023**

(51) International Patent Classification (IPC):
*H04N 19/11* (2014.01)   *H04N 19/593* (2014.01)
*H04N 19/132* (2014.01)   *H04N 19/105* (2014.01)
*H04N 19/70* (2014.01)   *H04N 19/186* (2014.01)

(52) Cooperative Patent Classification (CPC):
H04N 19/105; H04N 19/11; H04N 19/132;
H04N 19/186; H04N 19/593; H04N 19/70

(86) International application number:
**PCT/KR2023/014265**

(87) International publication number:
**WO 2024/063532 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.09.2022 KR 20220118765**

(71) Applicant: **LG Electronics Inc.**
**Yeongdeungpo-gu**
**Seoul 07336 (KR)**

(72) Inventors:
• **HONG, Myungoh**
**Seoul 06772 (KR)**
• **LIM, Jaehyun**
**Seoul 06772 (KR)**
• **CHOI, Jangwon**
**Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **INTRA PREDICTION MODE-BASED IMAGE ENCODING/DECODING METHOD AND APPARATUS USING MULTI REFERENCE LINE (MRL), AND RECORDING MEDIUM FOR STORING BITSTREAM**

(57)    An image encoding/decoding method and device are provided. An image decoding method according to the present disclosure comprises the steps of: determining reference samples separated by a distance of n samples from a current block and reference samples separated by a distance of m samples from the current block (wherein the reference samples separated by the distance of n samples include a top reference sample and a top-right reference sample, and reference samples separated by the distance of m samples include a left reference sample and a bottom-left reference sample); and generating a prediction block of the current block on the basis of a weighted sum of at least two of the determined reference samples, wherein the weight used in the weighted sum calculation is determined on the basis of the n or m, which may be natural numbers.

FIG. 19

```
        ┌─────────┐
        │  START  │
        └────┬────┘
             │                              S1910
   ┌─────────▼──────────────────────┐
   │  DETERMINE REFERENCE SAMPLES    │
   │ THAT ARE N SAMPLE DISTANCE AWAY │
   │        FROM CURRENT BLOCK AND   │
   │ REFERENCE SAMPLES THAT ARE M    │
   │  SAMPLE DISTANCE AWAY FROM      │
   │        CURRENT BLOCK            │
   └─────────┬──────────────────────┘
             │                              S1920
   ┌─────────▼──────────────────────┐
   │ GENERATE PREDICTION BLOCK OF    │
   │ CURRENT BLOCK BASED ON WEIGHTED │
   │   SUM OF AT LEAST TWO REFERENCE │
   │ SAMPLES AMONG DETERMINED        │
   │      REFERENCE SAMPLES          │
   └─────────┬──────────────────────┘
             │
        ┌────▼────┐
        │   END   │
        └─────────┘
```

**Description**

[Technical Field]

The present disclosure relates to an image encoding/decoding method, apparatus, and recording medium for storing a bitstream, and more specifically, to an image encoding/decoding method and apparatus based on an intra prediction mode using Multi Reference Lines (MRL), as well as a recording medium for storing a bitstream generated by the image encoding method/apparatus of the present disclosure.

[Background Art]

Recently, the demand for high-resolution and high-quality images, such as High Definition (HD) images and Ultra High Definition (UHD) images, has been increasing in various fields. As image data becomes high-resolution and high-quality, the amount of transmitted information or bit rate increases relative to conventional image data. The increase in transmitted information or bit rate amount leads to an increase in transmission costs and storage costs.

Accordingly, a high-efficiency image compression technology is required to effectively transmit, store, and reproduce the information of high-resolution and high-quality images.

[Disclosure]

[Technical Problem]

The present disclosure is to provide an image encoding/decoding method and apparatus with improved encoding/decoding efficiency.

The present disclosure is to provide an image encoding/decoding method and apparatus for performing an intra prediction mode.

The present disclosure is to provide an image encoding/decoding method and apparatus for performing an intra prediction mode using Multi Reference Lines (MRL).

The present disclosure is to provide an image encoding/decoding method and apparatus that fuses a plurality of prediction blocks generated by using MRL.

The present disclosure is to provide an image encoding/decoding method and apparatus for performing a planar mode using MRL.

The present disclosure is to provide an image encoding/decoding method and apparatus generating samples using a planar mode within the template area of a Template based Intra Mode Derivation(TIMD) mode.

The present disclosure is to provide a non-transitory computer-readable recording medium for storing a bitstream generated by the image encoding method or apparatus according to the present disclosure.

The present disclosure is to provide a non-transitory computer-readable recording medium for storing a bitstream which is received and decoded by the image decoding apparatus according to the present disclosure and used for image reconstruction.

The present disclosure is to provide a method for transmitting a bitstream which is generated by the image encoding method or apparatus according to the present disclosure.

The technical problems to be achieved in the present disclosure are not limited to the technical problems described above, and other technical problems not described may be clearly understood by those of ordinary skill in the art from the following descriptions.

[Technical Solution]

According to an embodiment of the present disclosure, a method of decoding an image performed by an image decoding apparatus comprises the steps of determining reference samples that are n samples away from a current block and reference samples that are m samples away from the current block (the reference samples that are n samples away include a top reference sample and a top-right reference sample, and the reference samples that are m samples away include a left reference sample and a bottom-left reference sample), and generating a prediction block of the current block based on a weighted sum of at least two reference samples among the determined reference samples, wherein a weight used in the weighted sum is determined based on n or m, and n and m may be natural numbers.

According to an embodiment of the present disclosure, generating a prediction block of the current block may include generating prediction blocks of the current block based on a weighted sum of the reference samples and generating a final prediction block of the current block based on the prediction blocks.

According to an embodiment of the present disclosure, the reference samples may further include reference samples generated by modifying the reference samples that are n samples away based on n and reference samples generated by modifying the reference samples that are m samples away based on m.

According to an embodiment of the present disclosure, the reference samples may further include reference samples generated in a planar mode based on at least two of the top reference sample, the left reference sample, the top-right reference sample, the bottom-left reference sample, the top-left reference sample adjacent to the current block, the reference sample adjacent to the bottom-left reference sample, or the reference sample adjacent to the top-right reference sample, wherein the planar mode may include a horizontal planar mode and a vertical planar mode.

According to an embodiment of the present disclosure, the reference samples may further include reference samples generated by averaging the sample values of a plurality of reference samples generated in a planar mode based on at least two of the top reference sample, the left reference sample, the top-right reference sample, the bottom-left reference sample, the top-left reference sample adjacent to the current block, the reference sample adjacent to the bottom-left reference sample, or the reference sample adjacent to the top-right reference sample, wherein the planar mode may include a horizontal planar mode and a vertical planar mode.

According to an embodiment of the present disclosure, an image decoding method performed by an image decoding apparatus comprises the steps of deriving a first prediction mode and a second prediction mode for a current block based on template matching costs (the template matching cost calculated based on the first prediction mode is less than the template matching cost calculated based on the second prediction mode), generating a first prediction block based on the first prediction mode and a first reference sample line and generating a second prediction block based on the second prediction mode and a second reference sample line, and generating a final prediction block of the current block based on the first prediction block and the second prediction block, wherein at least one of the first reference sample line or the second reference sample line may be determined based on whether the first prediction mode or the second prediction mode is a planar mode.

According to an embodiment of the present disclosure, based on the first prediction mode being a planar mode, the first reference sample line may be determined as the first reference sample line adjacent to the current block, and the second reference sample line may be determined as the r-th reference sample line adjacent to the current block.

According to an embodiment of the present disclosure, based on the second prediction mode being a planar mode, the first reference sample line may be determined as the r-th reference sample line adjacent to the current block, and the second reference sample line may be determined as the first reference sample line adjacent to the current block.

According to an embodiment of the present disclosure, based on the first prediction mode and the second prediction mode including a planar mode and a non-planar mode, a final prediction block may be generated by weighted sum of a first prediction block generated in the planar mode based on the first reference sample line adjacent to the current block, a second prediction block generated in the planar mode based on the r-th reference sample line adjacent to the current block, and a third prediction block generated in the non-planar mode based on the r-th reference sample line.

According to an embodiment of the present disclosure, the template matching cost is calculated based on a prediction block resulting from predicting the template area of the current block in a planar mode, wherein the top reference sample and the top-right reference sample used for predicting the template area may be obtained from the first reference sample line adjacent to the top template area, and the left reference sample and the bottom-left reference sample used for predicting the template area may be obtained from the first reference sample line adjacent to the left template area.

According to an embodiment of the present disclosure, the template area may include a top template area and a left template area, wherein the bottom-left reference sample used for predicting the top template area may be the same as the bottom-left reference sample of the left template area, and the top-right reference sample used for predicting the left template area may be the same as the top-right reference sample of the top template area.

According to an embodiment of the present disclosure, the template area may include a top template area and a left template area, wherein the bottom-left reference sample used for predicting the top template area may have the same y-coordinate as the bottom-left sample of the top template area, and the top-right reference sample used for predicting the left template area may have the same x-coordinate as the top-right sample of the left template area.

According to an embodiment of the present disclosure, the value of the left reference sample and the value of the bottom-left reference sample used for predicting the top template area may be modified based on the width of the left template area, and the value of the top reference sample and the value of the top-right reference sample used for predicting the left template area may be modified based on the height of the top template area.

According to an embodiment of the present disclosure, an image encoding method performed by an image encoding apparatus includes deriving the first prediction mode and the second prediction mode for a current block based on a template matching cost, generating the first prediction block based on the first prediction mode and the first reference sample line, generating the second prediction block based on the second prediction mode and the second reference sample line, and generating the final prediction block of the current block based on the first prediction block and the second prediction block, wherein at least one of the first reference sample line or the second reference sample line may be determined based on whether the first prediction mode or the second prediction mode is a planar mode.

According to an embodiment of the present disclosure, a computer-readable recording medium may store a bitstream generated by the image encoding method.

According to an embodiment of the present disclosure, in a method of transmitting a bitstream generated by the image encoding method, the image encoding method includes deriving the first prediction mode and the second prediction mode for a current block based on a template matching cost, generating the first prediction block based on the first prediction mode and the first reference sample line, generating the second prediction block based on the second prediction mode and the second reference sample line, and generating the final prediction block of the current block based on the first prediction block and the second prediction block, wherein at least one of the first reference sample line or the second reference sample line may be determined based on whether the first prediction mode or the second prediction mode is a planar mode.

[Advantageous Effects]

According to the present disclosure, an image encoding/decoding method and apparatus with improved encoding/decoding efficiency may be provided.

According to the present disclosure, an image encoding/decoding method and apparatus for performing an intra prediction mode may be provided.

According to the present disclosure, an image encoding/decoding method and apparatus for performing an intra prediction mode using Multi Reference Lines (MRL) may be provided.

According to the present disclosure, an image encoding/decoding method and apparatus for fusing a plurality of prediction blocks generated using MRL may be provided.

According to the present disclosure, an image encoding/decoding method and apparatus for performing a planar mode using MRL may be provided.

According to the present disclosure, an image encoding/decoding method and apparatus for generating samples in a planar mode within the template area of a Template based Intra Mode Derivation (TIMD) mode may be provided.

According to the present disclosure, a non-transitory computer-readable recording medium for storing a bitstream generated by the image encoding method or apparatus according to the present disclosure may be provided.

According to the present disclosure, a non-transitory computer-readable recording medium for storing a bitstream which is received and decoded by the image decoding apparatus according to the present disclosure and used for image reconstruction may be provided.

According to the present disclosure, a method of transmitting a bitstream generated by the image encoding method or apparatus according to the present disclosure may be provided.

The effects obtainable from the present disclosure are not limited to the effects described above, and other effects not described may be clearly understood by those of ordinary skill in the art from the following descriptions.

[Description of Drawings]

FIG. 1 shows a schematic diagram of a video coding system to which an embodiment according to the present disclosure may be applied.

FIG. 2 shows a schematic diagram of an image encoding apparatus to which an embodiment according to the present disclosure may be applied.

FIG. 3 shows a schematic diagram of an image decoding apparatus to which an embodiment according to the present disclosure may be applied.

FIG. 4 shows a flowchart of an intra prediction-based video/image encoding method.

FIG. 5 shows an exemplary diagram of the configuration of an intra predictor according to the present disclosure.

FIG. 6 shows a flowchart of an intra prediction-based video/image decoding method.

FIG. 7 shows an exemplary diagram of the configuration of an intra predictor according to the present disclosure.

FIG. 8 and FIG. 9 show diagrams of reference sample lines used for Multi Reference Line (MRL)-based intra prediction according to the present disclosure.

FIG. 10 shows a diagram of a template area and reference samples used for Template-based Intra Mode Derivation (TIMD) according to the present disclosure.

FIG. 11 shows a diagram of a method of constructing a Histogram of Gradient (HoG) in a Decoder-side Intra Mode Derivation (DIMD) mode according to the present disclosure.

FIG. 12 shows a diagram of a method of constructing a prediction block when applying the Decoder-side Intra Mode Derivation (DIMD) mode according to the present disclosure.

FIG. 13 shows a diagram of an MRL-based intra prediction method according to an embodiment of the present disclosure.

FIG. 14 shows a diagram of reference samples used for generating a prediction sample according to the present disclosure.

FIG. 15 shows a diagram of reference samples used for generating a prediction sample according to another embodiment of the present disclosure.

FIG. 16 shows a diagram of reference samples used for generating a prediction sample according to another embodiment of the present disclosure.

FIG. 17 shows a diagram of modified reference samples used for generating a prediction sample according to an embodiment of the present disclosure.

FIG. 18 shows a diagram of modified reference samples used for generating a prediction sample according to another embodiment of the present disclosure.

FIG. 19 shows a flowchart of an image encoding/decoding method according to the present disclosure.

FIG. 20 shows a diagram of reference sample line used for generating a prediction block according to the present disclosure.

FIG. 21 shows a diagram of reference samples used for generating a prediction block based on the Template-based Intra Mode Derivation (TIMD) mode according to an embodiment of the present disclosure.

FIG. 22 shows a diagram of reference samples used for generating a prediction block based on the Template-based Intra Mode Derivation (TIMD) mode according to another embodiment of the present disclosure.

FIG. 23 shows a diagram of reference samples used for generating a prediction block based on the Template-based Intra Mode Derivation (TIMD) mode according to another embodiment of the present disclosure.

FIG. 24 shows a flowchart of an image encoding/decoding method according to the present disclosure.

FIG. 25 shows an exemplary diagram of a content streaming system to which an embodiment of the present disclosure may be applied.

[Best Mode]

Hereinafter, embodiments of the present disclosure will be described in detail by referring to the attached drawings for those of ordinary skill in the art to easily implement them. However, the present disclosure may be implemented in various different forms and is not limited to the embodiments described herein.

In describing embodiments of the present disclosure, detailed explanations of well-known configurations or functions are omitted when they are deemed to obscure the main point of the present disclosure. Additionally, parts irrelevant to the description of the present disclosure are omitted from the drawings, and similar reference numerals have been assigned to similar parts.

In the present disclosure, when a certain component is described as being "connected," "coupled," or "linked" to another component, this may include not only a direct connection but also an indirect connection where another component may exist in the middle. Additionally, when a certain component is described as "including" or "having" another component, this means that, unless explicitly stated otherwise, it does not exclude other components but may further include additional components.

In the present disclosure, the terms first, second, etc. are used solely for the purpose of distinguishing one component from another and do not limit the order or importance of the components unless explicitly stated otherwise. Accordingly, a first component in one embodiment may be referred to as a second component in another embodiment, and similarly, a second component in one embodiment may be referred to as a first component in another embodiment within the range of the present disclosure.

In the present disclosure, distinguishable components are described to clearly explain their respective characteristics and do not necessarily mean that the components are separate. In other words, a plurality of components may be integrated into a single hardware or software unit, or a single component may be distributed across multiple hardware or software units. Accordingly, without explicitly describing them, such integrated or distributed embodiments are also included in the range of the present disclosure.

In the present disclosure, the components described in various embodiments do not necessarily mean essential components, and some may be optional components. Accordingly, embodiments composed of a subset of the components described in one embodiment are also included in the range of the present disclosure. Additionally, embodiments that include additional components beyond those described in various embodiments are also included in the range of the present disclosure.

The present disclosure relates to the encoding and decoding of images, and the terms used herein may have the ordinary meanings commonly used in the field of technology to which this disclosure belongs unless the terms are newly defined in the present disclosure.

In the present disclosure, "video" may refer to a set of images in sequence over time.

In the present disclosure, "picture" generally refers to a unit representing a single image at a specific point in time. A slice/tile is an encoding unit that constitutes a part of a picture, and a picture may be composed of one or more slices/tiles.

Additionally, a slice/tile may include one or more coding tree units (CTUs).

In the present disclosure, "pixel" or "pel" may refer to the smallest unit that constitutes one picture (or image). Additionally, the term "sample" may be used as a corresponding term for a pixel. A sample may generally represent a pixel or the value of a pixel and may indicate only the pixel/pixel value of a luma component or only the pixel/pixel value of a chroma component.

In the present disclosure, "unit" may refer to a basic unit of image processing. A unit may include at least one of a specific area of a picture or information related to the area. Depending on the context, the term "unit" may be used interchangeably with "sample array," "block," "area," etc. In general, an M×N block may include a set (or array) of samples (or a sample array) or a set (or array) of transform coefficients, consisting of M columns and N rows.

In the present disclosure, the term "current block" may refer to one of "current coding block", "current coding unit", "encoding target block", "decoding target block", or "processing target block". When prediction is performed, "current block" may refer to "current prediction block" or "prediction target block". When transform (inverse transform)/quantization (dequantization) is performed, "current block" may refer to "current transform block" or "transform target block". When filtering is performed, "current block" may refer to "filtering target block".

In the present disclosure, unless explicitly stated as a chroma block, the term "current block" may refer to a block that includes both a luma component block and a chroma component block or may refer to "the luma block of the current block". The luma component block of the current block may be explicitly expressed with terms such as "luma block" or "current luma block", clearly indicating it as a luma component block. Additionally, the chroma component block of the current block may be explicitly expressed with terms such as "chroma block" or "current chroma block", clearly indicating it as a chroma component block.

In the present disclosure, "/" and "," may refer to "and/or". For example, "A/B" and "A, B" may refer to "A and/or B". Additionally, "A/B/C" and "A, B, C" may refer to "at least one of A, B, and/or C".

In the present disclosure, "or" may refer to "and/or". For example, "A or B" may mean 1) "A" only, 2) "B" only, or 3) "A and B." Alternatively, in the present disclosure, "or" may also mean "additionally or alternatively".

In the present disclosure, "at least one of A, B, and C" may refer to "only A", "only B", "only C", or "any combination of A, B, and C". Additionally, "at least one of A, B, or C" or "at least one of A, B and/or C" may refer to "at least one of A, B, and C".

The parentheses used in the present disclosure may refer to "for example". For example, when described as "prediction (intra prediction)", "intra prediction" may be proposed as an example of "prediction". In other words, the "prediction" in the present disclosure is not limited to "intra prediction," and "intra prediction" may be proposed as an example of "prediction". Additionally, when described as "prediction (i.e., intra prediction)", "intra prediction" may also be proposed as an example of "prediction".

## Overview of the video coding system

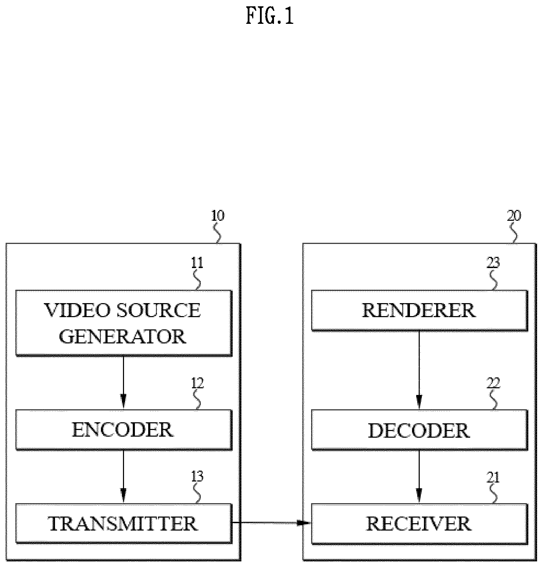

FIG. 1 shows a schematic diagram of a video coding system to which an embodiment according to the present disclosure may be applied.

A video coding system according to an embodiment may include an encoder apparatus 10 and a decoder apparatus 20. The encoder apparatus 10 may transmit encoded video and/or image information or data to the decoder apparatus 20 through a digital storage medium or network in the form of a file or streaming.

An encoder apparatus 10 according to an embodiment may include a video source generator 11, an encoder 12, and a transmitter 13. A decoder apparatus 20 according to an embodiment may include a receiver 21, a decoder 22, and a renderer 23. The encoder 12 may be referred to as a video/image encoder, and the decoder 22 may be referred to as a video/image decoder. The transmitter 13 may be included in the encoder 12. The receiver 21 may be included in the decoder 22. The renderer 23 may include a display, and the display may be configured as a separate device or external component.

The video source generator 11 may obtain a video/an image through a process of capturing, synthesizing, or generating a video/an image. The video source generator 11 may include a video/an image capture device and/or a video/an image generation device. The video/image capture device may include, for example, one or more cameras, a video/an image archive containing previously captured video/image, etc. The video/image generation device includes, for example, a computer, tablet, or smartphone, and may (electronically) generate a video/an image. For example, virtual video/image may be generated through a computer, etc., and in this case, the video/image capturing process may be replaced by the process of generating related data.

The encoder 12 may encode the input video/image. The encoder 12 may perform a series of procedures such as prediction, transform, quantization, etc. for compression and encoding efficiency. The encoder 12 may output the encoded data (encoded video/image information) in the form of a bitstream.

The transmitter 13 may obtain the encoded video/image information or data output in the form of a bitstream and transmit it to the receiver 21 of the decoder apparatus 20 or another external object through a digital storage medium or network, in the form of a file or streaming. The digital storage medium may include various storage media such as USB, SD, CD, DVD, Blu-ray, HDD, SSD, etc. The transmitter 13 may include an element for generating media files through a predetermined file format and element for transmission over broadcast/communication networks. The transmitter 13 may be provided as a separate transmission apparatus from the encoder 120, in which case the transmission apparatus may include at least one processor for obtaining the encoded video/image information or data in bitstream form and a transmitter for delivering it in the form of file or streaming. The receiver 21 may extract/receive the bitstream from the storage medium or network and transmit it to decoder 22.

The decoder 22 may decode the video/image by performing a series of procedures such as dequantization, inverse transform, prediction, etc. corresponding to the operations of the encoder 12.

The renderer 23 may render the decoded video/image. The rendered video/image may be displayed through the display unit.

## Overview of the image encoding apparatus

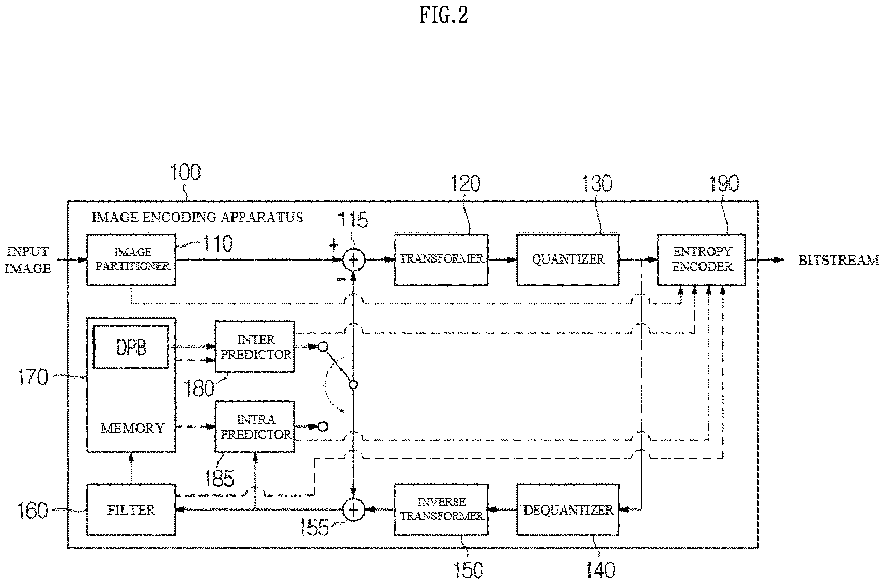

FIG. 2 shows a schematic diagram of an image encoding apparatus to which an embodiment according to the present disclosure may be applied.

As described in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter predictor 180, an intra predictor 185, and an entropy encoder 190. The inter predictor 180 and the intra predictor 185 may collectively be referred to as a "predictor." The transformer 120, the quantizer 130, the dequantizer 140, and the inverse transformer 150 may be included in a residual processor. The residual processor may further include the subtractor 115.

All or at least some of the multiple components constituting the image encoding apparatus 100 may be implemented as a single hardware component (i.e., the image encoding apparatus 100 or a processor), depending on the embodiment. Additionally, the memory 170 may include a decoded picture buffer (DPB) and may be implemented by a digital storage medium.

The image partitioner 110 may partition the input image (or picture, frame) input to the image encoding apparatus 100 into at least one processing unit. As an example, the processing unit may be referred to as a coding unit (CU). A coding unit may be obtained by recursively partitioning a coding tree unit (CTU) or a largest coding unit (LCU) according to a quad-tree, binary-tree, or ternary-tree (QT/BT/TT) structure. For example, a coding unit may be divided into a deeper-depth coding unit based on a quad-tree structure, a binary-tree structure, and/or a ternary-tree structure. For partitioning a coding unit, the quad-tree structure may be applied first, followed by the binary-tree structure and/or the ternary-tree structure. The coding procedure according to the present disclosure may be performed based on the final coding unit, which is not further partitioned. The largest coding unit may be used directly as the final coding unit, or a deeper-depth coding unit obtained by partitioning the largest coding unit may be used as the final coding unit. Here, the coding procedure may include a procedure such as prediction, transform, and/or reconstruction, which will be described later. As another example, the processing unit for the coding procedure may be a prediction unit (PU) or a transform unit (TU). The prediction unit and the transform unit may each be divided or partitioned from the final coding unit. The prediction unit may be a unit for sample prediction, and the transform unit may be a unit for deriving a transform coefficient and/or deriving a residual signal from a transform coefficient.

The predictor (inter predictor 180 or intra predictor 185) may perform prediction for a target block (current block) and generate a predicted block that includes prediction samples for the current block. The predictor may determine whether intra prediction or inter prediction is applied to the current block or coding unit (CU). The predictor may generate various information related to the prediction of the current block and transmit it to the entropy encoder 190. The prediction-related information may be encoded by the entropy encoder 190 and may be output in the form of a bitstream.

The intra predictor 185 may predict the current block by referring to samples within the current picture. The referenced samples may be located in the neighboring area of the current block or may be located farther away, depending on the intra prediction mode and/or intra prediction method. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes, depending on the granularity of the prediction direction. However, this is an example, and a greater or fewer number of directional prediction modes may be used depending on the configuration. The intra predictor 185 may also determine the prediction mode applied to the current block by using the prediction mode applied to neighboring block.

The inter predictor 180 may derive a predicted block for the current block based on a reference block (reference sample array) specified by a motion vector on a reference picture. To reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on the inter prediction direction (i.e. L0 prediction, L1 prediction, Bi prediction, etc.). In inter prediction, neighboring block may include spatial neighboring block present within the current picture and temporal neighboring block present in the reference picture. The reference picture containing the reference block and the reference picture containing the temporal neighboring block may be the same or different. The temporal neighboring block may be referred to as a collocated reference block or a collocated coding unit (colCU). The reference picture containing the temporal neighboring block may be referred to as a collocated picture (colPic). For example, the inter predictor 180 may construct a motion information candidate list based on neighboring blocks and generate information indicating which candidate is used to derive the motion vector and/or reference picture index of the current block. Inter prediction may be performed based on various prediction modes, and for example, in the skip mode and merge mode, the inter predictor 180 may use the motion information of neighboring block as the motion information of the current block. In skip mode, unlike merge mode, residual signal may not be transmitted. In the motion vector prediction (MVP) mode, the motion vector of a neighboring block may be used as a motion vector predictor, and the motion vector of the current block may be signaled by encoding the motion vector difference and an indicator for the motion vector predictor. The motion vector difference may refer to the difference between the motion vector of the current block and the motion vector predictor.

The predictor may generate a prediction signal based on various prediction methods and/or prediction techniques described later. For example, the predictor may apply intra prediction or inter prediction for the prediction of the current block, and it may also apply both intra prediction and inter prediction simultaneously. The prediction method that applies intra prediction and inter prediction simultaneously for the prediction of the current block may be referred to as combined inter and intra prediction (CIIP). Additionally, the predictor may perform intra block copy (IBC) for the prediction of the current block. Intra block copy may be used, for example, for screen content coding (SCC), etc. in applications such as game content image/video coding. IBC is a method of predicting the current block by using a pre-reconstructed reference block within the current picture, located at a predetermined distance from the current block. When IBC is applied, the position of the reference block within the current picture may be encoded as a vector (block vector) corresponding to the predetermined distance. IBC basically performs prediction within the current picture, but since it derives a reference block within the current picture, it may operate similarly to inter prediction. In other words, IBC may use at least one of the inter prediction methods described in the present disclosure.

The prediction signal generated by the predictor may be used to generate a reconstructed signal or to generate a residual signal. The subtractor 115 may generate a residual signal (residual block, residual sample array) by subtracting the prediction signal (predicted block, predicted sample array) output from the predictor from the input image signal (original block, original sample array). The generated residual signal may be transmitted to the transformer 120.

The transformer 120 may generate transform coefficients by applying a transform method to the residual signal. For example, the transform method may include at least one of Discrete Cosine Transform (DCT), Discrete Sine Transform (DST), Karhunen-Loeve Transform (KLT), Graph-Based Transform (GBT), or Conditionally Non-linear Transform (CNT). Here, GBT refers to a transform obtained from a graph when the relationship information between pixels is represented as a graph. CNT refers to a transform obtained based on a prediction signal generated by using all previously reconstructed pixels. The transform process may be applied to a pixel block of the same square size or to a non-square variable-sized block.

The quantizer 130 may quantize the transform coefficients and transmit them to the entropy encoder 190. The entropy encoder 190 may encode the quantized signal (information on the quantized transform coefficients) and output it as a bitstream. The information on the quantized transform coefficients may be referred to as residual information. The quantizer 130 may rearrange the block-shaped quantized transform coefficients into a one-dimensional vector based on a coefficient scan order and may generate the information on the quantized transform coefficients based on the one-dimensional vector of quantized transform coefficients.

The entropy encoder 190 may perform various encoding methods, such as exponential Golomb, context-adaptive variable length coding (CAVLC), or context-adaptive binary arithmetic coding (CABAC). The entropy encoder 190 may encode not only the quantized transform coefficients but also information necessary for video/image reconstruction (i.e., values of syntax elements) either together or separately with the quantized transform coefficients. The encoded information (i.e., encoded video/image information) may be transmitted or stored in the form of a bitstream in network abstraction layer (NAL) unit. The video/image information may further include information on various parameter sets, such as an adaptation parameter set (APS), a picture parameter set (PPS), a sequence parameter set (SPS), or a video parameter set (VPS). Additionally, the video/image information may further include general constraint information. The signaling information, transmitted information, and/or syntax elements described in the present disclosure may be included in the bitstream by being encoded through the above-described encoding process.

The bitstream may be transmitted through a network or stored in a digital storage medium. Here, the network may include a broadcast network and/or a communication network, etc., and the digital storage medium may include various storage media such as USB, SD, CD, DVD, Blu-ray, HDD, SSD, etc.

A transmitter (not shown) for transmitting the signal output from the entropy encoder 190 and/or a storage unit (not shown) for storing the signal may be provided as an internal/external element of the image encoding apparatus 100, or the transmitter may be configured as a component of the entropy encoder 190.

The quantized transform coefficients output from the quantizer 130 may be used to generate a residual signal. For example, a residual signal (residual block or residual samples) may be reconstructed by applying dequantization and inverse transform to the quantized transform coefficients through the dequantizer 140 and the inverse transformer 150.

The adder 155 may generate a reconstructed signal (reconstructed picture, reconstructed block, or reconstructed sample array) by adding the reconstructed residual signal to the prediction signal output from the inter predictor 180 or the intra predictor 185. When there is no residual for the target block, such as when the skip mode is applied, the predicted block may be used as the reconstructed block. The adder 155 may be referred to as a reconstructor or a reconstructed block generator. The generated reconstructed signal may be used for intra prediction of the next target block within the current picture and, as described later, may also be used for inter prediction of the next picture after undergoing filtering.

Meanwhile, luma mapping with chroma scaling (LMCS) may be applied during picture encoding and/or reconstruction process.

The filter 160 may apply filtering to the reconstructed signal to enhance subjective/objective quality. For example, the filter 160 may apply various filtering methods to the reconstructed picture to generate a modified reconstructed picture, and the modified reconstructed picture may be stored in the memory 170, specifically in the DPB of the memory 170. The various filtering methods may include, for example, deblocking filtering, sample adaptive offset, adaptive loop filter, bilateral filter, etc. The filter 160 may generate various filtering-related information, as described later in the explanations of each filtering method, and may transmit it to the entropy encoder 190. The filtering-related information may be encoded by the entropy encoder 190 and output in the form of a bitstream.

The modified reconstructed picture transmitted to the memory 170 may be used as a reference picture in the inter predictor 180. When inter prediction is applied in this case, the image encoding apparatus 100 may avoid prediction mismatches between the image encoding apparatus 100 and the image decoding apparatus, and may improve encoding efficiency.

The DPB in the memory 170 may store the modified reconstructed picture for use as a reference picture in the inter predictor 180. The memory 170 may store the motion information of a block in the current picture where motion information has been derived (or encoded) and/or the motion information of blocks in already reconstructed pictures. The stored motion information may be transmitted to the inter predictor 180 for use as motion information of spatial neighboring block or temporal neighboring block. The memory 170 may store the reconstructed samples of reconstructed blocks in the current picture and transmit them to the intra predictor 185.

## Overview of the image decoding apparatus

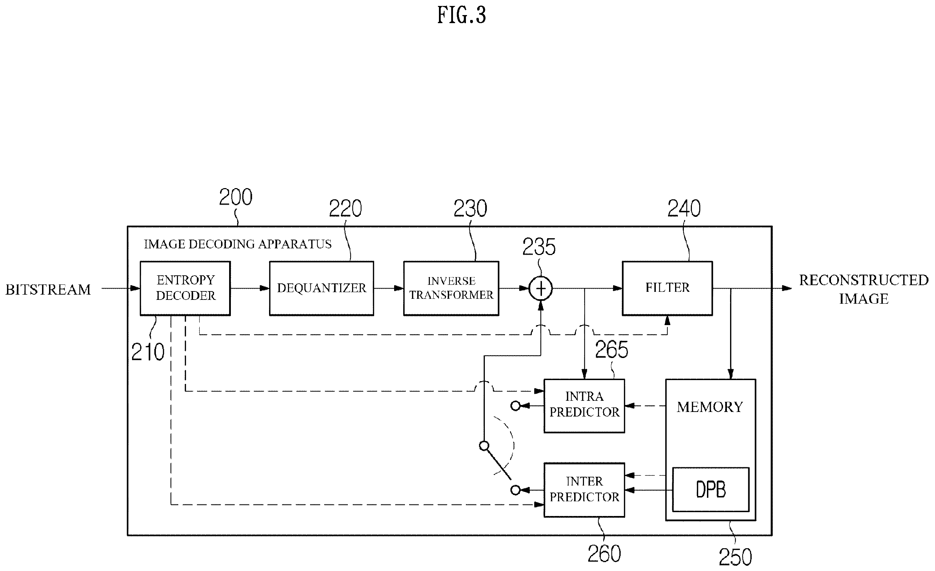

FIG. 3 shows a schematic diagram of an image decoding apparatus to which an embodiment according to the present disclosure may be applied.

As shown in FIG. 3, the image decoding apparatus 200 may include an entropy decoder 210, a dequantizer 220, an inverse transformer 230, an adder 235, a filter 240, a memory 250, an inter predictor 260, and an intra predictor 265. The inter predictor 260 and the intra predictor 265 may collectively be referred to as a "predictor". The dequantizer 220 and the inverse transformer 230 may be included in a residual processor.

All or at least some of the multiple components constituting the image decoding apparatus 200 may be implemented as a single hardware component (i.e., the image decoding apparatus 200 or a processor), depending on the embodiment. Additionally, the memory 170 may include a DPB and may be implemented by a digital storage medium.

The image decoding apparatus 200, which receives a bitstream containing video/image information, may perform a process corresponding to the process performed by the image encoding apparatus 100 in FIG. 2 to reconstruct the image. For example, the image decoding apparatus 200 may perform decoding using the processing unit applied in the image encoding apparatus 100. Therefore, the processing unit for decoding may be, for example, a coding unit. The coding unit may be a coding tree unit or may be obtained by splitting a largest coding unit. Additionally, the reconstructed image signal decoded and output through the image decoding apparatus 200 may be played back through a playback device (not shown).

The image decoding apparatus 200 may receive a signal output from the image encoding apparatus 100 in FIG. 2 in the form of a bitstream. The received signal may be decoded through the entropy decoder 210. For example, the entropy decoder 210 may parse the bitstream to extract the information necessary for image reconstruction (or picture reconstruction) (i.e., video/image information). The video/image information may further include information on various parameter sets, such as an adaptation parameter set (APS), a picture parameter set (PPS), a sequence parameter set (SPS), or a video parameter set (VPS). Additionally, the video/image information may further include general constraint information. The image decoding apparatus 200 may additionally use information on the parameter set and/or the general constraint information to decode the image. The signaling information, received information, and/or syntax elements described in the present disclosure may be obtained from the bitstream by being decoded through the decoding process. For example, the entropy decoder 210 may decode the information in the bitstream based on coding methods such as exponential Golomb encoding, CAVLC, or CABAC, and may output a syntax element value necessary for image reconstruction and quantized values of a transform coefficient related to a residual. More specifically, the CABAC entropy decoding method may receive a bin corresponding to a syntax element in the bitstream, may determine a context model using the information of the decoding target syntax element, the decoding information of neighboring block and the decoding target block, or information of previously decoded symbol/bin, may predict the probability of bin occurrence according to the determined context model, and may perform arithmetic decoding of the bin to generate a symbol corresponding to each syntax element. In this case, the CABAC entropy decoding method may update the context model for the next symbol/bin context model using the decoded symbol/bin information after determining the context model. Among the decoded information from the entropy decoder 210, the prediction-related information may be provided to the predictor (inter predictor 260 and intra predictor 265), and the residual value which is entropy decoded by the entropy decoder 210, in other words, the quantized transform coefficients and related parameter information, may be input to the dequantizer 220. Additionally, among the decoded information from the entropy decoder 210, filtering-related information may be provided to the filter 240. Meanwhile, a receiver (not shown) that receives the signal output from the image encoding apparatus 100 may be additionally configured as an internal/external element of the image decoding apparatus 200, or the receiver may be configured as a component of the entropy decoder 210.

Meanwhile, the image decoding apparatus 200 according to the present disclosure may also be referred to as a video/image/picture decoding apparatus. The image decoding apparatus 200 may include an information decoder (video/image/picture information decoder) and/or a sample decoder (video/image/picture sample decoder). The information decoder may include the entropy decoder 210, and the sample decoder may include at least one of the dequantizer 220, the inverse transformer 230, the adder 235, the filter 240, the memory 250, the inter predictor 260, or the intra predictor 265.

The dequantizer 220 may dequantize the quantized transform coefficients and output the transform coefficients. The dequantizer 220 may rearrange the quantized transform coefficients into a two-dimensional block. In this case, the rearrangement may be performed based on the coefficient scan order applied in the image encoding apparatus 100. The dequantizer 220 may perform dequantization on the quantized transform coefficients using quantization parameter (i.e., quantization step size information) and may obtain transform coefficients.

The inverse transformer 230 may perform an inverse transform on the transform coefficients to obtain a residual signal (residual block, or residual sample array).

The predictor may perform prediction for the current block and generate a predicted block that includes prediction samples for the current block. The predictor may determine whether intra prediction or inter prediction is applied to the current block based on the prediction-related information output from the entropy decoder 210 and may determine a specific intra/inter prediction mode (prediction method) .

That the predictor may generate a prediction signal based on various prediction methods (techniques) which will be described later is the same as described in the explanation of the predictor in the image encoding apparatus 100.

The intra predictor 265 may predict the current block by referring to samples within the current picture. The explanation of the intra predictor 185 may also be applied in the same way to the intra predictor 265.

The inter predictor 260 may derive a predicted block for the current block based on a reference block (reference sample array) specified by a motion vector on a reference picture. In this case, to reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on the inter prediction direction (i.e., L0 prediction, L1 prediction, Bi prediction, etc.). In inter prediction, a neighboring block may include spatial neighboring block within the current picture and temporal neighboring block in the reference picture. For example, the inter predictor 260 may construct a motion information candidate list based on neighboring blocks and derive the motion vector and/or reference picture index of the current block based on the received candidate selection information. Inter prediction may be performed based on various prediction modes (methods), and the prediction-related information may include information indicating the inter prediction mode (method) applied to the current block.

The adder 235 may generate a reconstructed signal (reconstructed picture, reconstructed block, reconstructed sample array) by adding the obtained residual signal to the prediction signal (predicted block, predicted sample array) output from the predictor (including the inter predictor 260 and/or the intra predictor 265). When there is no residual for the target block, such as when the skip mode is applied, the predicted block may be used as the reconstructed block. The explanation of the adder 155 may also be applied in the same way to the adder 235. The adder 235 may be referred to as a reconstructor or a reconstructed block generator. The generated reconstructed signal may be used for intra prediction of the next target block within the current picture and as described later, may also be used for inter prediction of the next picture after undergoing filtering.

The filter 240 may apply filtering to the reconstructed signal to enhance subjective/objective quality. For example, the filter 240 may apply various filtering methods to the reconstructed picture to generate a modified reconstructed picture, and the modified reconstructed picture may be stored in the memory 250, specifically in the DPB of the memory 250. The various filtering methods may include, for example, deblocking filtering, sample adaptive offset, adaptive loop filter, bilateral filter, etc.

The (modified) reconstructed picture stored in the DPB of the memory 250 may be used as a reference picture in the inter predictor 260. The memory 250 may store the motion information of a block in the current picture where motion information has been derived (or decoded) and/or the motion information of blocks in already reconstructed picture. The stored motion information may be transmitted to the inter predictor 260 to be used as motion information of a spatial neighboring block or a temporal neighboring block. The memory 250 may store the reconstructed samples of reconstructed blocks in the current picture and transmit them to the intra predictor 265.

In this specification, the embodiments described for the filter 160, the inter predictor 180, and the intra predictor 185 of the image encoding apparatus 100 may be applied in the same or corresponding manner to the filter 240, the inter predictor 260, and the intra predictor 265 of the image decoding apparatus 200.

**Overview of Intra Prediction**

Hereinafter, intra prediction according to the present disclosure will be described.

Intra prediction may refer to a prediction method which generates prediction samples for the current block based on reference samples within the picture to which the current block belongs (hereinafter, the current picture). When intra prediction is applied to the current block, neighboring reference samples to be used for intra prediction of the current block may be derived. The neighboring reference samples of the current block may include a total of $2\times nH$ samples neighboring/adjacent to the left boundary and neighboring the bottom-left of the current block of $nW\times nH$ size, a total of $2\times nW$ samples adjacent to the top boundary and neighboring the top-right of the current block, and one sample neighboring the top-left of the current block. Alternatively, the neighboring reference samples of the current block may include top neighboring samples of multiple columns and left neighboring samples of multiple rows. Additionally, the neighboring reference samples of the current block may include a total of nH samples neighboring a right boundary of the current block of a size of nWxnH, a total of nW samples neighboring a bottom boundary of the current block, and one sample neighboring a bottom-right of the current block.

However, some of the neighboring reference samples of the current block may not yet be decoded or may not be available. In this case, the image decoding apparatus 200 may construct the neighboring reference samples for prediction by substituting the unavailable samples with available samples. Alternatively, neighboring reference samples for prediction may be constructed through interpolation of the available samples.

When neighboring reference samples are derived, (i) prediction sample may be derived based on the average or interpolation of the neighboring reference samples of the current block, and (ii) prediction sample may be derived based on reference sample located in a specific (prediction) direction for prediction sample among the neighboring reference samples of the current block. Case (i) may be referred to as a non-directional mode or a non-angular mode, and case (ii) may be referred to as a directional mode or an angular mode.

Additionally, the prediction sample may be generated through interpolation between a first neighboring sample located in the prediction direction of the intra prediction mode of the current block and a second neighboring sample located in the opposite direction based on the prediction target sample of the current block among the neighboring reference samples. The above-described case may be referred to as linear interpolation intra prediction (LIP).

Additionally, chroma prediction samples may be generated based on luma samples using a linear model. This case may be called Linear Model (LM) mode.

Additionally, a temporary prediction sample of the current block may be derived based on filtered neighboring reference samples, and a prediction sample of the current block may be derived by calculating a weighted sum of at least one of a reference sample derived according to the intra prediction mode among the conventional neighboring reference samples, i.e. unfiltered neighboring reference samples, and the temporary prediction sample. This case is referred to as Position-dependent intra prediction (PDPC).

Additionally, a reference sample line with the highest prediction accuracy among the multiple neighboring reference sample lines of the current block may be selected, and a prediction sample may be derived using a reference sample located in the prediction direction in the corresponding line. In this case, information about the used reference sample line (i.e., intra_luma_ref_idx) may be encoded and signaled in the bitstream. In this case, it is referred to as multi-reference line intra prediction (MRL) or MRL-based intra prediction. When MRL is not applied, reference samples may be derived from a reference sample line directly adjacent to the current block, and in this case, information about the reference sample line may not be signaled.

Additionally, the current block may be divided into vertical or horizontal subpartitions, and intra prediction may be performed based on the same intra prediction mode for each subpartition. In this case, neighboring reference samples for intra prediction may be derived for each subpartition unit. In other words, the reconstructed sample of the previous subpartition in the encoding/decoding order may be used as the neighboring reference sample of the current subpartition. In this case, the intra prediction mode for the current block is applied identically to the subpartitions, and the neighboring reference sample are derived and used for each subpartition unit, thereby intra prediction performance may be improved in some cases. This prediction method is referred to as intra sub-partitions (ISP) or ISP-based intra prediction.

The intra prediction methods described above may be referred to by various terms, such as intra prediction type or additional intra prediction mode, to distinguish them from directional or non-directional intra prediction mode. For example, the intra prediction method (i.e., intra prediction type or additional intra prediction mode, etc.) may include at least one of the above-described LIP, LM, PDPC, MRL, or ISP. A general intra prediction method that excludes specific intra prediction type such as the LIP, the LM, the PDPC, the MRL, the ISP, etc. may be referred to as a normal intra prediction type. The normal intra prediction type may be generally applied when the specific intra prediction type described above is not used, and prediction may be performed based on the intra prediction mode described above. Meanwhile, post-processing filtering may be performed on the derived prediction sample when necessary.

Specifically, the intra prediction procedure may include an intra prediction mode/type determination step, a neighboring reference sample derivation step, and an intra prediction mode/type-based prediction sample derivation step. Additionally, a post-filtering step may be performed on the derived prediction sample when necessary.

Meanwhile, in addition to the intra prediction types described above, affine linear weighted intra prediction (ALWIP) may be used. The ALWIP may also be referred to as linear weighted intra prediction (LWIP) or matrix weighted intra prediction or matrix-based intra prediction (MIP). When MIP is applied to a current block, prediction samples for the current block may be derived by i) using neighboring reference samples on which an averaging procedure has been performed, ii) performing a matrix-vector multiplication procedure, and iii) further performing a horizontal/vertical interpolation procedure when necessary. Intra prediction modes used for MIP may be configured differently from those used in LIP, PDPC, MRL, ISP intra prediction, or normal intra prediction described above. The intra prediction mode for MIP may be referred to as the MIP intra prediction mode, MIP prediction mode, or MIP mode. For example, the matrix and offset used in the matrix-vector multiplication may be set differently depending on the intra prediction mode for MIP. Here, the matrix may be referred to as (MIP) weight matrix, and the offset may be referred to as the (MIP) offset vector or (MIP) bias vector. A specific MIP method will be described later.

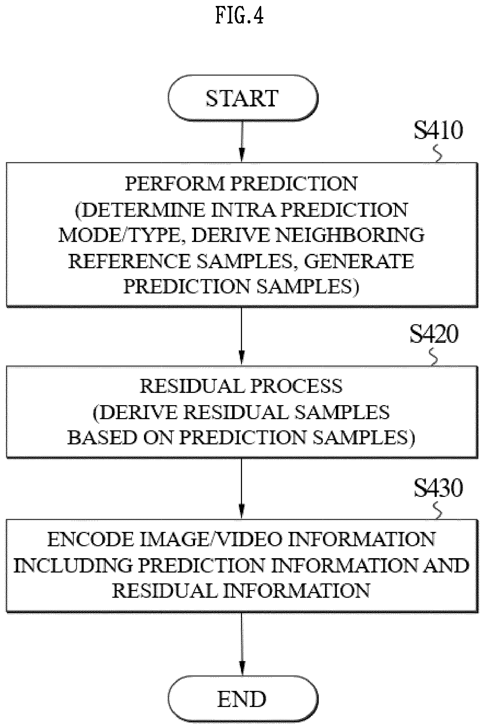

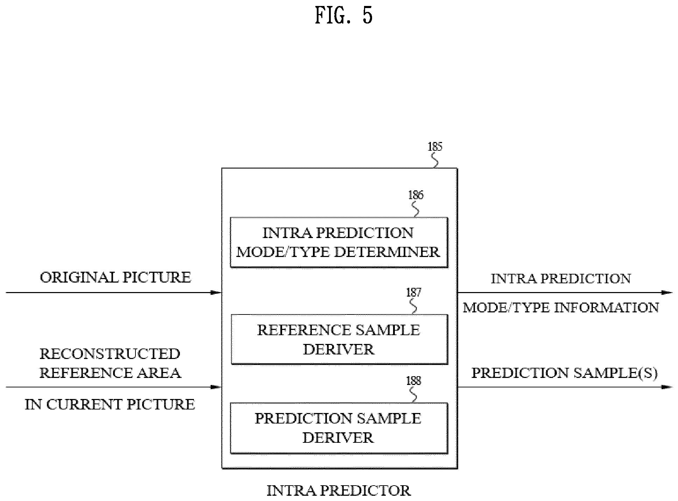

The block reconstruction procedure based on intra prediction and the intra predictor in the encoding apparatus will be described later with reference to FIG. 4 and FIG. 5.

FIG. 4 is a flowchart of an intra prediction-based video/image encoding method.

The encoding method of FIG. 4 may be performed by the image encoding apparatus 100 of FIG. 2. Specifically, step S410 may be performed by the intra predictor 185, and step S420 may be performed by the residual processor. Specifically, step S420 may be performed by the subtractor 115. Step S430 may be performed by the entropy encoder 190. The prediction information in step S430 may be derived by the intra predictor 185, and the residual information in step S430 may be derived by the residual processor. The residual information refers to information about the residual samples. The residual information may include information on the quantized transform coefficients of the residual samples. As described above, the residual samples are derived as transform coefficients through the transformer 120 of the image encoding apparatus 100, and the transform coefficients may be derived as quantized transform coefficients through the quantizer 130. The information on the quantized transform coefficients may be encoded in the entropy encoder 190 through the residual coding process.

The image encoding apparatus 100 may perform intra prediction for the current block S410. The image encoding apparatus 100 may determine the intra prediction mode/type for the current block, may derive neighboring reference samples of the current block, and may generate prediction samples within the current block based on the intra prediction mode/type and the neighboring reference samples. Here, the processes of determining the intra prediction mode/type, deriving the neighboring reference samples, and generating the prediction samples may be performed simultaneously, or one process may be performed before another.

FIG. 5 shows an exemplary diagram of the configuration of an intra predictor 185 according to the present disclosure.

As shown in FIG. 5, the intra predictor 185 of the image encoding apparatus 100 may include an intra prediction mode/type determiner 186, a reference sample deriver 187, and/or a prediction sample deriver 188. The intra prediction mode/type determiner 186 may determine the intra prediction mode/type for the current block. The reference sample deriver 187 may derive the neighboring reference samples of the current block. The prediction sample deriver 188 may derive the prediction samples of the current block. Meanwhile, although not illustrated, when the prediction sample filtering process which will be described later is performed, the intra predictor 185 may further include a prediction sample filter (not shown).

The image encoding apparatus 100 may determine the intra prediction mode/type applied to the current block among a plurality of intra prediction modes/types. The image encoding apparatus 100 may compare the rate-distortion costs (RD cost) of the intra prediction modes/types and may determine the optimal intra prediction mode/type for the current block.

Meanwhile, the image encoding apparatus 100 may perform a prediction sample filtering process. Prediction sample filtering may be referred to as post-filtering. Through the prediction sample filtering process, some or all of the prediction samples may be filtered. In some cases, the prediction sample filtering process may be omitted.

Referring again to FIG. 4, the image encoding apparatus 100 may generate residual samples for the current block based on the prediction samples or the filtered prediction samples S420. The image encoding apparatus 100 may derive the residual samples by subtracting the prediction samples from the original samples of the current block. In other words, the image encoding apparatus 100 may derive residual sample value by subtracting the corresponding prediction sample value from the original sample value.

The image encoding apparatus 100 may encode image information including information about the intra prediction (prediction information) and residual information about the residual samples S430. The prediction information may include intra prediction mode information and/or intra prediction method information. The image encoding apparatus 100 may output the encoded image information in the form of a bitstream. The output bitstream may be transmitted to the image decoding apparatus 200 through a storage medium or a network.

The residual information may include a residual coding syntax, which will be described later. The image encoding apparatus 100 may derive quantized transform coefficients by transforming/quantizing the residual samples. The residual information may include information on the quantized transform coefficients.

Meanwhile, as described above, the image encoding apparatus 100 may generate a reconstructed picture (including reconstructed samples and reconstructed block). The image encoding apparatus 100 may perform dequantization/inverse transform on the quantized transform coefficients to derive (modified) residual samples. The reason for applying dequantization/inverse transform after transform/quantization of the residual samples is to derive the residual samples identical to the residual samples derived in the image decoding apparatus 200. The image encoding apparatus 100 may generate a reconstructed block including reconstructed samples for the current block based on the prediction samples and the (modified) residual samples. A reconstructed picture for the current picture may be generated based on the reconstructed block. As described above, an in-loop filtering process may further be applied to the reconstructed picture.

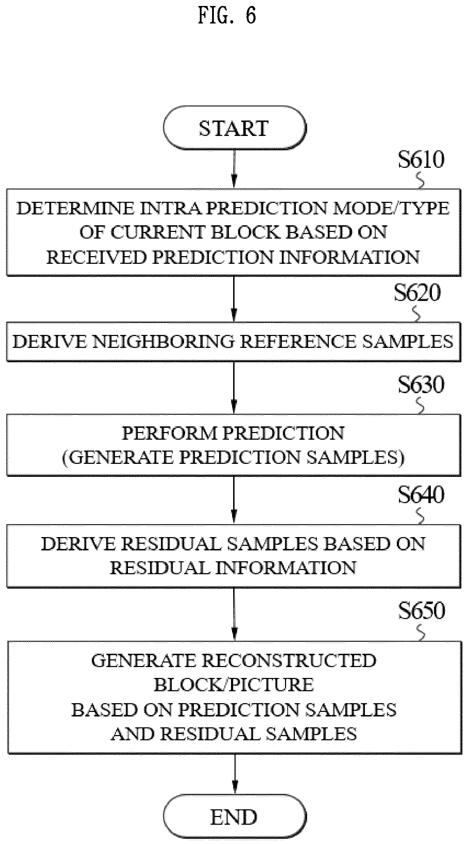

FIG. 6 shows a flowchart of an intra prediction-based video/image decoding method.

The image decoding apparatus 200 may perform operations corresponding to the operations performed in the image encoding apparatus 100.

The decoding method in FIG. 6 may be performed by the image decoding apparatus 200 in FIG. 3. Steps S610 to S630 may be performed by the intra predictor 265, and the prediction information in step S610 and the residual information in step S640 may be obtained from the bitstream by the entropy decoder 210. The residual processor of the image decoding apparatus 200 may derive residual samples for the current block based on the residual information S640. Specifically, the dequantizer 220 of the residual processor may perform dequantization on the quantized transform coefficients derived based on the residual information to obtain transform coefficients, and the inverse transformer 230 of the residual processor may perform inverse transform on the transform coefficients to derive residual samples for the current block. Step S650 may be performed by the adder 235 or the reconstructor.

Specifically, the image decoding apparatus 200 may derive the intra prediction mode/type for the current block based on the received prediction information (i.e., intra prediction mode/type information) S610. Additionally, the image decoding apparatus 200 may derive neighboring reference samples of the current block S620. The image decoding apparatus 200 may generate prediction samples within the current block based on the intra prediction mode/type and the neighboring reference samples S630. In this case, the image decoding apparatus 200 may perform a prediction sample filtering process. Prediction sample filtering may be referred to as post-filtering. Through this prediction sample filtering process, some or all of the prediction samples may be filtered. In some cases, the prediction sample filtering process may be omitted.

The image decoding apparatus 200 may generate residual samples for the current block based on the received residual information S640. The image decoding apparatus 200 may generate reconstructed samples for the current block based on the prediction samples and the residual samples and derive a reconstructed block that includes the reconstructed samples S650. A reconstructed picture for the current picture may be generated based on the reconstructed block. As described above, an in-loop filtering process may further be applied to the reconstructed picture.

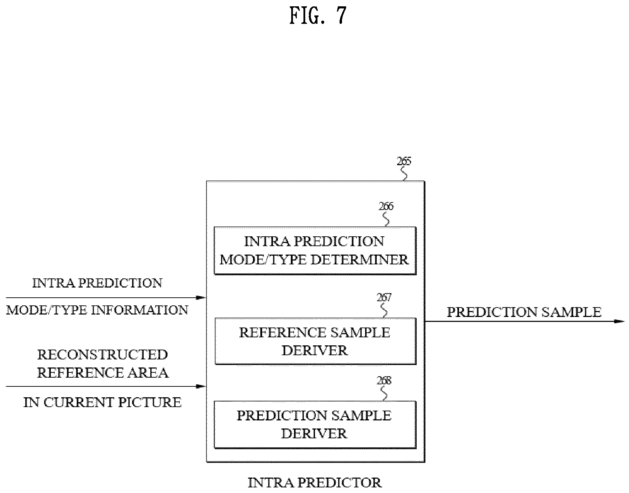

FIG. 7 shows an exemplary diagram of the configuration of an intra predictor 265 according to the present disclosure.

As shown in FIG. 7, the intra predictor 265 of the image decoding apparatus 200 may include an intra prediction mode/type determiner 266, a reference sample deriver 267, and a prediction sample deriver 268. The intra prediction mode/type determiner 266 may determine the intra prediction mode/type for the current block based on the intra prediction mode/type information generated in the intra prediction mode/type determiner 186 of the image encoding apparatus 100 and signaled, and the reference sample deriver 266 may derive neighboring reference samples of the current block from the reconstructed reference area in the current picture. The prediction sample deriver 268 may derive prediction samples of the current block. Meanwhile, although not illustrated, when the above-described prediction sample filtering process is performed, the intra predictor 265 may further include a prediction sample filter (not shown).

The intra prediction mode information may include, for example, flag information (i.e., intra_luma_mpm_flag) indicating whether the most probable mode (MPM) is applied to the current block or the remaining mode is applied, and when the MPM is applied to the current block, the intra prediction mode information may further include index information (i.e., intra_luma_mpm_idx) indicating one of the intra prediction mode candidates (MPM candidates). The intra prediction mode candidates (MPM candidates) may be configured as an MPM candidate list or an MPM list. Additionally, when the MPM is not applied to the current block, the intra prediction mode information may further include remaining mode information (i.e., intra_luma_mpm_remainder) indicating one of the remaining intra prediction modes excluding the intra prediction mode candidates (MPM candidates). The image decoding apparatus 200 may determine the intra prediction mode of the current block based on the intra prediction mode information.

Additionally, the intra prediction method information may be implemented in various forms. As an example, the intra prediction method information may include intra prediction method index information indicating one of the intra prediction methods. As another example, the intra prediction method information may include at least one of reference sample line information (i.e., intra_luma_ref_idx) indicating whether the MRL is applied to the current block and, when the MRL is applied, which reference sample line is used, ISP flag information (i.e., intra_subpartitions_mode_flag) indicating whether the ISP is applied to the current block, ISP type information (i.e., intra_subpartitions_split_flag) indicating a split type of subpartitions when the ISP is applied, flag information indicating whether PDPC is applied, or flag information indicating whether LIP is applied. Additionally, the intra prediction type information may include a MIP flag indicating whether MIP is applied to the current block. In the present disclosure, the ISP flag information may be referred to as an ISP application indicator.

The intra prediction mode information and/or the intra prediction method information may be encoded/decoded through the coding method described in the present disclosure. For example, the intra prediction mode information and/or the intra prediction method information may be encoded/decoded through entropy coding (i.e., CABAC, CAVLC) based on truncated (rice) binary code.

Meanwhile, in addition to PLANAR mode, DC mode, and directional intra prediction modes, the intra prediction mode may further include a cross-component linear model (CCLM) mode for chroma sample. The CCLM mode may be classified into L_CCLM, T_CCLM, and LT_CCLM depending on whether left samples, top samples, or both are considered for deriving CCLM parameter, and it may be applied only to chroma component.

The intra prediction mode, for example, may be indexed as shown in Table 1 below.

[Table 1]

| Intra prediction mode | Associated name |
|---|---|
| 0 | INTRA_PLANAR |
| 1 | INTRA_DC |
| 2..66 | INTRA_ANGULAR2..INTRA_ANGULAR66 |
| 81..83 | INTRA_LT_CCLM, INTRA_L_CCLM, INTRA_T_CCLM |

Meanwhile, the intra prediction type (or additional intra prediction mode, etc.) may include at least one of LIP, PDPC, MRL, ISP, or MIP described above. The intra prediction type may be indicated based on intra prediction type information, and the intra prediction type information may be implemented in various forms. As an example, the intra prediction type information may include an intra prediction type index that indicates one of the intra prediction types. In another example, the intra prediction type information may include at least one of reference sample line information (i.e., intra_luma_ref_idx) indicating whether MRL is applied to the current block and, when MRL is applied, which reference sample line is used, an ISP flag information (i.e., intra_subpartitions_mode_flag) indicating whether ISP is applied to the current block; ISP type information (i.e., intra_subpartitions_split_flag) indicating the partitioning type of subpartitions when ISP is applied, a flag information indicating whether PDPC is applied, or a flag information indicating whether LIP is applied. Additionally, the intra prediction type information may include an MIP flag (which may be referred to as intra_mip_flag) indicating whether MIP is applied to the current block.

**Overview of Multi Reference Line (MRL)**

In conventional intra prediction, only the neighboring samples from the first line above the current block and the first line to the left of the current block were used as reference samples for intra prediction. However, in the MRL method, the image encoding apparatus 100 and/or the image decoding apparatus 200 may perform intra prediction by using neighboring samples located in a sample line positioned at a distance of one to three samples away from the top and/or left of the current block as reference samples.

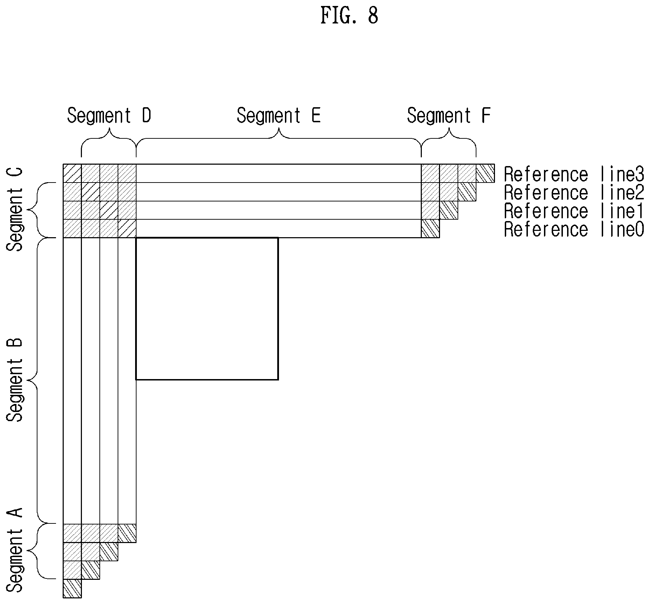

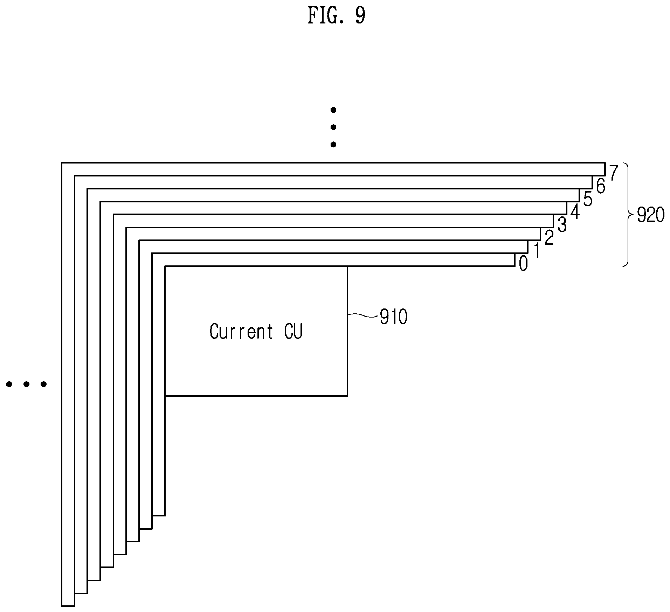

FIG. 8 and FIG. 9 illustrate reference sample line used for MRL-based intra prediction according to the present disclosure. FIG. 8 may be an example of multi reference line. Referring to FIG. 8, at least one of a reference sample line 0 (Reference Line 0), a reference sample line 1 (Reference Line 1), a reference sample line 2 (Reference Line 2), or a reference sample line 3 (Reference Line 3) may be used for prediction of the current block. Here, the multi reference line index (i.e., mrl_idx) may be information indicating the reference sample line used for intra prediction. For example, the multi reference line index may be signaled through coding unit syntax as shown in Table 2 below. The multi reference line index may be configured in the form of the intra_luma_ref_idx syntax element.

[Table 2]

| coding_unit( x0, y0, cbWidth, cbHeight, treeType ) { |
|---|
| if( slice_type != I ) { |
| **cu_skip_flag**[ x0 ][ y0 ] |
| if( cu_skip_flag[ x0 ][ y0 ] = = 0 ) |
| **pred_mode_flag** |
| } |
| if( CuPredMode[ x0 ][y0] = = MODE_INTRA ) { |
| if( treeType = = SINGLE TREE ‖ treeType = = DUAL_TREE_LUMA ) { |
| if( ( y0 % CtbSizeY ) > 0) |
| **intra_luma_ref_idx**[ x0 ][ y0 ] ... |
| if (intra_luma_ref_idx[ x0 ][ y0 ] = = 0) |
| **intra_luma_mpm_flag**[ x0 ][ y0 ] |
| if( intra_luma_mpm_flag[ x0 ][ y0 ] ) |
| **intra_luma_mpm_idx**[ x0 ][ y0 ] |
| else |
| **intra_luma_mpm_remainder**[ x0 ][ y0 ] |
| } |
| ... |
| } |

Here, intra _luma_ref_idx[x0] [y0] may represent the intra reference line index IntraLumaRefLineIdx[x0][y0], as shown in Table 3 below. When intra_luma_ref_idx[x0][y0] is not present (i.e., is not signaled), it may be inferred as 0. The intra_luma_ref_idx may be referred to as an (intra) reference sample line index or mrl_idx. Additionally, intra_luma_ref_idx may be referred to as intra_luma_ref_line_idx.

[Table 3]

| intra_luma_ref_idx[ x0 ][ y0 ] | IntraLumaRefLineIdx[ x0 ][ y0 ] |
|---|---|
| 0 | 0 |
| 1 | 1 |
| 2 | 3 |

MRL may not be used for the blocks in the first line (row) within a coding tree unit (CTU). This may be to prevent the use of extended reference lines outside the current CTU line. In other words, this may be to prevent the use of external reference samples which are not included in the current CTU. Additionally, when the above-described additional reference line is used, position-dependent intra prediction (PDPC) may not be used. In other words, when extended reference samples are used, PDPC may not be applied.

The MRL method may perform intra prediction using neighboring samples, located in a sample line that are one to three sample distances away from the top and/or left of the current block, as reference samples. However, in extended MRL, intra prediction may be performed using neighboring samples, located in a sample line that are up to twelve sample distances away from the top and/or left of the current block, as reference samples. Referring to FIG. 9, multiple reference sample lines adjacent to the current block may be configured as an extended MRL candidate list. For example, the reference sample line index in the extended MRL list may be configured as {1, 3, 5, 7, 12}.

When extended MRL is used, intra_luma_ref_idx may be configured as shown in Table 4 below. intra_luma_ref_idx[x0][y0] may represent the intra reference line index IntraLumaRefLineIdx[x0][y0]. When intra_luma_ref_idx[x0][y0] is not present (i.e., is not signaled), intra_luma_ref_idx[x0][y0] may be inferred as 0. intra_luma_ref_idx may be referred to as an (intra) reference sample line index or mrl_idx. Additionally, intra_luma_ref_idx may be referred to as intra_luma_ref_line_idx.

[Table 4]

| intra_luma_ref_idx[ x0 ][ y0 ] | IntraLumaRefLineIdx[ x0 ][ y0 ] |
|---|---|
| 0 | 0 |
| 1 | 1 |
| 2 | 3 |
| 3 | 5 |
| 4 | 7 |
| 5 | 12 |

**Overview of Template based intra mode derivation (TIMD)**

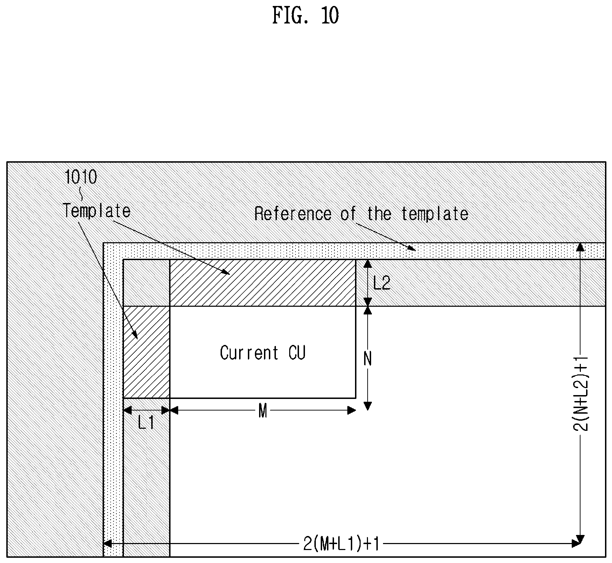

FIG. 10 shows a diagram of a template area and reference sample used for TIMD according to the present disclosure. TIMD may select the mode with the smallest SATD as the intra mode of the current block by calculating the Sum of Absolute Transformed Differences (SATD) between the prediction block predicted from the template area 1010 and the actual reconstructed sample for the intra prediction modes (IPM) intra mode of adjacent intra block and inter block.

According to another embodiment of the present disclosure, the present disclosure may select two modes with the smallest SATD and then generate prediction blocks for each of the selected two prediction modes. The two generated prediction blocks may be blended by a weighted sum to generate the prediction block of the current block. Here, the blending of the two modes may be performed when the condition in Equation 1 below is satisfied.

[Equation 1]

$$costMode2 < 2*costMode1$$

Here, costMode1 may refer to the mode with the smallest SATD. Additionally, costMode2 may refer to the mode with the second smallest SATD.

When the condition in Equation 1 is satisfied, the final prediction block may be generated by blending the prediction blocks generated using the two modes. Otherwise, the final prediction block may be generated using only the mode with the smallest SATD value.

The weighting ratio applied when blending the prediction blocks generated using the two prediction modes with the smallest SATD may be as shown in Equation 2 below.

[Equation 2]

$$weight1 = costMode2/(costMode1+ costMode2)$$
$$weight2 = 1 - weight1$$

Here, weight1 may refer to the weight applied to the prediction block generated based on the mode with the smallest SATD. Additionally, weight2 may refer to the weight applied to the prediction block generated based on the mode with the second smallest SATD.

#### Overview of Decoder-side intra mode derivation (DIMD)

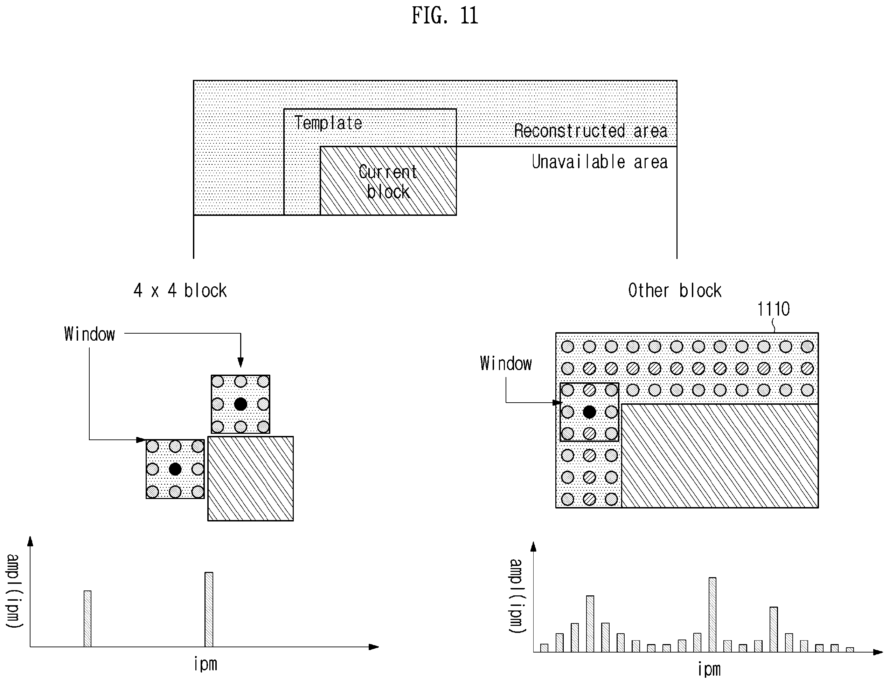

FIG. 11 illustrates a method for constructing a Histogram of Gradient (HoG) in the DIMD mode according to the present disclosure. The DIMD mode according to the present disclosure may derive intra prediction mode information from the image encoding apparatus 100 and the image decoding apparatus 200 and use it, without directly transmitting it. The DIMD mode may be performed by obtaining horizontal gradient and vertical gradient from the second neighboring reference column and row adjacent to the current block and constructing a HoG based on them.

Referring to FIG. 11, a HoG may be obtained by applying a Sobel filter using an L-shaped column and row of three neighboring pixels 1110 around the current block. In this case, when the boundary of the block exists in different CTUs, the neighboring pixels of the current block may not be used for texture analysis.

Meanwhile, a Sobel filter may be referred to as a Sobel operator and may be an efficient filter for detecting edges. When using a Sobel filter, two types of Sobel filters, Sobel filter for the vertical direction and Sobel filter for the horizontal direction, may be used.

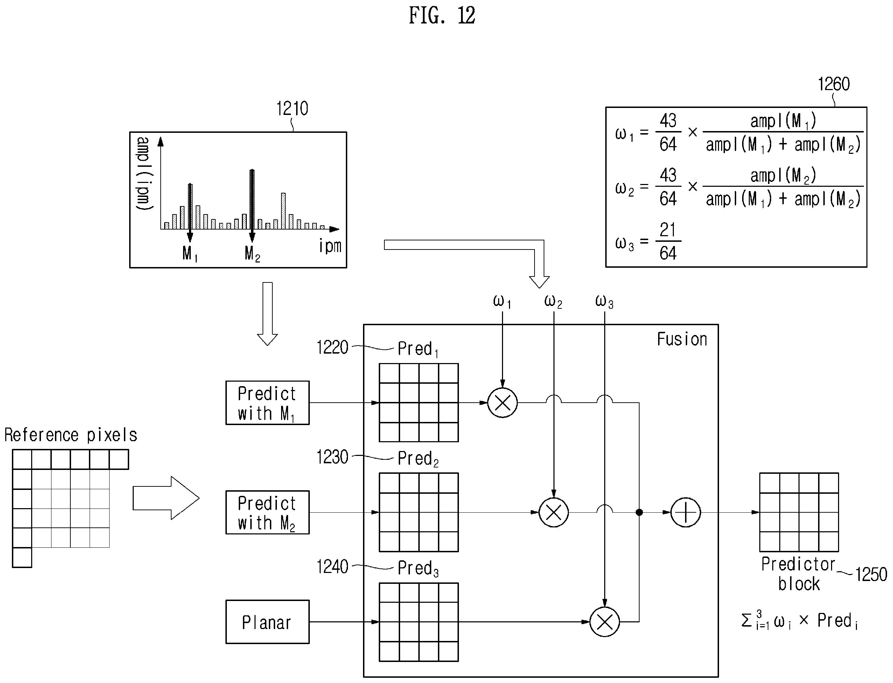

FIG. 12 illustrates a method for constructing a prediction block when applying the DIMD mode according to the present disclosure. According to FIG. 12, the DIMD mode may be performed by selecting two intra modes with the highest histogram amplitude 1210 and generating final prediction block 1250 by blending the prediction blocks predicted by two selected intra modes (1220, 1230) and the prediction block predicted by planar mode (1240). In this case, the weight applied when blending the prediction blocks may be derived from the histogram amplitude 1260. Additionally, a DIMD flag may be transmitted on a block unit to determine whether DIMD is used.

Hereinafter, image encoding/decoding method according to various embodiments of the present disclosure will be described in detail.

#### Embodiment 1

The present disclosure may relate to a method for performing the planar mode using the MRL method. In other words, the present disclosure may describe a method of performing the planar mode by using pre-reconstructed samples, located on a sample line which is apart from the top and/or left of the current block with the distance of k sample, as a reference sample. Here, k may be a natural number. In this case, by considering the distance between the reference samples which are not adjacent to the sample position within the current block when performing the planar mode, an effective planar prediction block may be generated.

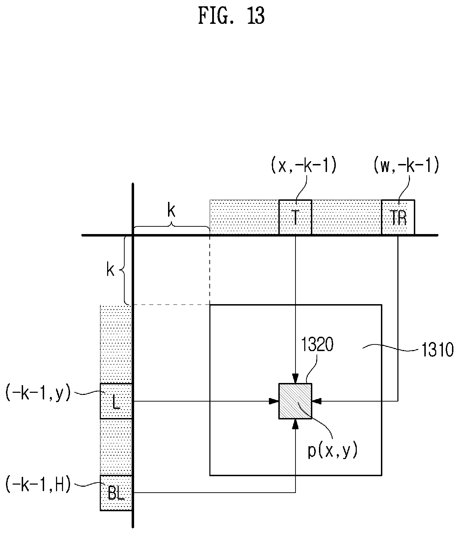

FIG. 13 illustrates an MRL-based intra prediction method according to the present disclosure. Referring to FIG. 13, the prediction sample p(x, y) 1320 at position (x, y) within the current block 1310 may be generated using the top reference sample T, the top-right reference sample TR, the left reference sample L, and/or the bottom-left reference sample BL.

According to an embodiment of the present disclosure, the encoder apparatus 100 and/or the decoder apparatus 200 may generate the prediction sample 1320 using a horizontal direction planar mode and/or a vertical direction planar mode. When defining the position of the top-left sample of the current block as (0, 0), the horizontal direction planar mode may be the mode generating a prediction sample $P_h(x,y)$ at position (x, y) using the left reference sample L located at (-k-1, y) and the top-right reference sample TR located at (W, -k-1). Here, k may represent the distance between the current block and the reference sample line. Additionally, W may represent the width of the current block. The prediction sample $p_h(x,y)$ may be calculated using Equation 3 below.

[Equation 3]

$$p_h(x, y) = m_h * L + n_h * TR$$

In Equation 3, $m_h$ and $n_h$ may be the weight applied to the L and the TR, respectively. The values of $m_h$ and $n_h$ may be calculated using Equation 4 below. In other words, $m_h$ and $n_h$ may be determined based on the distance between the current block and the reference sample line, the size of the current block, and/or the position of the prediction sample.

[Equation 4]

$$(m_h, \ n_h) = \left( \frac{W-1-x}{W+k}, \ \frac{x+1+k}{W+k} \right)$$

$$(m_h, \ n_h) = \left( \frac{W-1-x}{W+k+1}, \ \frac{x+2+k}{W+k+1} \right)$$

When the position of the top-left pixel of the current block is set as (0,0), the vertical direction planar mode may be the mode generating the prediction sample $p_v(x,y)$ at position (x,y) using the top reference sample T located at (x, -k-1) and the bottom-left reference sample BL located at (-k-1, H). Here, k may represent the distance between the current block and the reference sample line. Additionally, H may represent the height of the current block. The prediction sample $p_v(x,y)$ may be calculated using Equation 5 below.

[Equation5]

$$p_v(x, y) = m_v * T + n_v * BL$$

In Equation 5, $m_v$ and $n_v$ may be the weight applied to the T and the BL, respectively. The values of $m_v$ and $n_v$ may be calculated using Equation 6 below. In other words, $m_v$ and $n_v$ may be determined based on the distance between the current block and the reference sample line, the size of the current block, and/or the position of the prediction sample.

[Equation 6]

$$(m_v, \ n_v) \ = \ (\frac{H-1-y}{H+k}, \ \frac{y+1+k}{H+k})$$

$$(m_v, \ n_v) \ = \ (\frac{H-1-y}{H+k+1}, \ \frac{y+2+k}{H+k+1})$$

The final prediction sample according to the present disclosure may be calculated using Equation 7. For example, the final prediction sample may be the prediction sample $p_h(x,y)$ generated using the horizontal direction planar mode. Alternatively, the final prediction sample may be the prediction sample $p_v(x,y)$ generated using the vertical direction planar mode. Additionally, the final prediction sample may be the average of the prediction sample $p_h(x,y)$ generated using the horizontal direction planar mode and the prediction sample $p_v(x,y)$ generated using the vertical direction planar mode.

[Equation 7]

$$p(x, y) = (p_h(x, y) + p_v(x, y) + 1)/2$$

$$p(x, y) = p_h(x, y)$$

$$p(x, y) = p_v(x, y)$$

According to another embodiment of the present disclosure, the prediction sample $p_h(x,y)$ generated by using the horizontal direction planar mode and the prediction sample $p_v(x,y)$ generated by using the vertical direction planar mode may each be calculated using Equation 8.

[Equation 8]

$$p_h(x, y) = (int_h * L + (2^i - int_h) * TR) \gg i$$

$$p_v(x, y) = (int_v * T + (2^i - int_v) * BL) \gg i$$

In Equation 8, $int_h$ may be a value obtained by approximating $m_h$ to an integer and may have a value ranging from 0 to $2^i$. Additionally, $int_v$ may be a value obtained by approximating $m_v$ to an integer and may have a value ranging from 0 to $2^i$. Here, i may be a natural number.

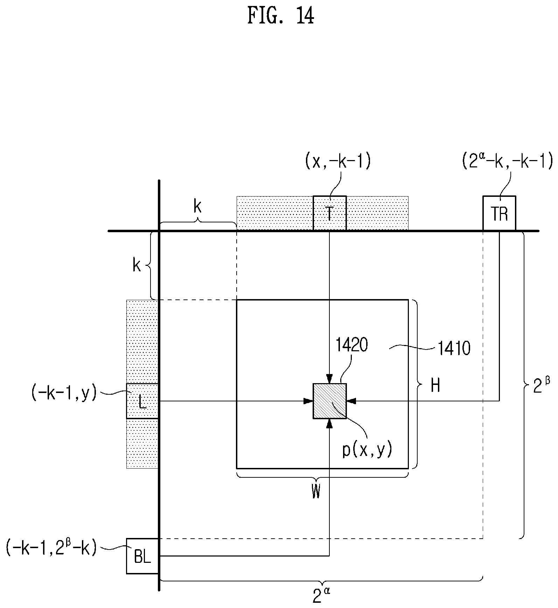

FIG. 14 illustrates reference samples used for generating a prediction sample according to an embodiment of the present disclosure. The present disclosure may use a TR sample located at ($2^\alpha$-k, -k-1), which is horizontally displaced by $2^\alpha$ from the left reference sample line, as shown in FIG. 14, to perform the horizontal direction planar mode. In this case, the image encoding apparatus 100 and/or the image decoding apparatus 200 may generate a prediction sample 1420 within the current block 1410 using Equation 3. Here, $m_h$ may be a weight applied to L. Additionally, $n_h$ may be a weight applied to TR. $m_h$ and $n_h$ may be calculated using Equation 9 below.

[Equation 9]

$$(m_h, \; n_h) \; = \; \left(\frac{2^{\alpha}-x-k-1}{2^{\alpha}}, \; \frac{x+k+1}{2^{\alpha}}\right)$$

Referring to FIG. 14, the present disclosure may use a BL sample located at (-k-1, $2^{\beta}$-k), which is vertically displaced by $2^{\beta}$ from the top reference sample line, to perform the vertical direction planar mode. In this case, the image encoding apparatus 100 and/or the image decoding apparatus 200 may generate a prediction sample 1420 within the current block 1410 using Equation 5. Here, $m_v$ may be a weight applied to T, and $n_v$ may be a weight applied to BL. $m_v$ and $n_v$ may be calculated using Equation 10 below.

[Equation 10]

$$(m_v, \; n_v) \; = \; \left(\frac{2^{\beta}-y-k-1}{2^{\beta}}, \; \frac{y+k+1}{2^{\beta}}\right)$$

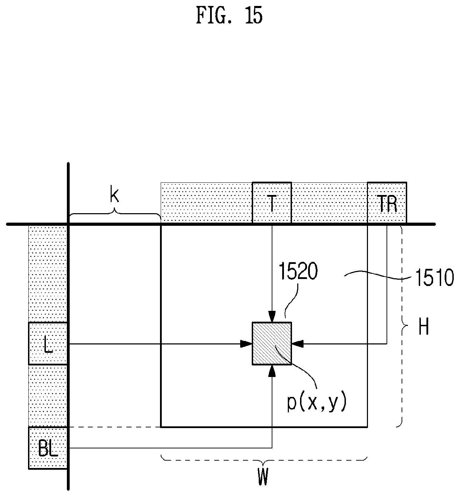

The diagram in FIG. 15 illustrates the reference samples used for generating a prediction sample according to another embodiment of the present disclosure. Referring to FIG. 15, the present disclosure may perform planar mode prediction by using pre-reconstructed samples, located on a reference sample line at a distance of k samples to the left and a reference sample line at 1 sample above the current block 1510, as a reference sample. Here, k may be a natural number. To perform horizontal direction planar mode, the present disclosure may generate prediction sample 1520 using Equation 3. In other words, to perform horizontal direction planar mode, the image encoding apparatus 100 and/or the image decoding apparatus 200 may use a left reference sample L located k samples away from the current block 1510 and a top-right reference sample TR located 1 sample away from the current block 1510. In this case, $m_h$ may be a weight applied to L. Additionally, $n_h$ may be a weight applied to TR. $m_h$ and $n_h$ may be calculated using Equation 11 below.

[Equation 11]

$$(m_h, \; n_h) \; = \; \left(\frac{W-1-x}{W+k}, \; \frac{x+1+k}{W+k}\right)$$

$$(m_h, \; n_h) \; = \; \left(\frac{W-1-x}{W+k+1}, \; \frac{x+2+k}{W+k+1}\right)$$

The present disclosure may generate prediction sample 1520 to perform vertical direction planar mode using Equation 5. In other words, to perform vertical direction planar mode, the image encoding apparatus 100 and/or the image decoding apparatus 200 may use a top reference sample T located 1 sample away from the current block 1510 and a bottom-left reference sample BL located k samples away from the current block 1510. In this case, $m_v$ may be a weight applied to T. Additionally, $n_v$ may be a weight applied to BL. $m_v$ and $n_v$ may be calculated using Equation 12 below.

[Equation 12]

$$(m_v, \; n_v) \; = \; \left(\frac{H-1-y}{H}, \; \frac{y+1}{H}\right)$$

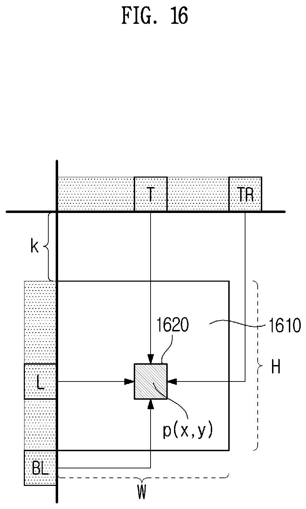

FIG. 16 illustrates the reference samples used for generating a prediction sample according to another embodiment of the present disclosure. Referring to FIG. 16, the present disclosure may perform planar mode prediction by using pre-reconstructed samples, located on a reference sample line at a reference sample line at 1 sample to the left and a reference sample line at a distance of k samples above the current block 1610, as a reference sample. Here, k may be a natural number. To perform horizontal direction planar mode, the present disclosure may generate prediction sample 1620 using Equation 3. In other words, to perform horizontal direction planar mode, the image encoding apparatus 100 and/or the image decoding apparatus 200 may use a left reference sample L located 1 sample away from the current block 1610 and a top-right reference sample TR located k samples away from the current block 1610. In this case, $m_h$ may be a weight applied to L. Additionally, $n_h$ may be a weight applied to TR. $m_h$ and $n_h$ may be calculated using Equation 13 below.

[Equation 13]

$$(m_h, \; n_h) \; = \; \left(\frac{W-1-x}{W}, \; \frac{x+1+k}{W}\right)$$

The present disclosure may generate prediction sample 1620 to perform vertical direction planar mode using Equation 5. In other words, to perform vertical direction planar mode, the image encoding apparatus 100 and/or the image decoding apparatus 200 may use a top reference sample T located k samples away from the current block 1610 and a bottom-left reference sample BL located 1 sample away from the current block 1610. In this case, $m_v$ may be a weight applied to T. Additionally, $n_v$ may be a weight applied to BL. $m_v$ and $n_v$ may be calculated using Equation 14 below.

[Equation 14]

$$(m_v, \ n_v) \ = \ (\frac{H-1-y}{H+k}, \ \frac{y+1+k}{H+k})$$

$$(m_v, \ n_v) \ = \ (\frac{H-1-y}{H+k+1}, \ \frac{y+2+k}{H+k+1})$$

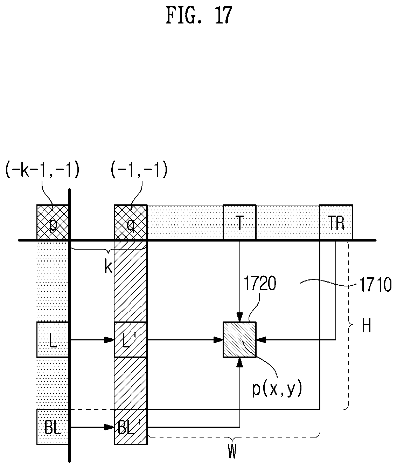

FIG. 17 illustrates modified reference samples for generating a prediction sample according to an embodiment of the present disclosure. FIG. 17 defines the top-left position of the current block 1710 as (0, 0), and the left and top areas of the current block 1710 may be pre-reconstructed areas. Referring to FIG. 17, when using pre-reconstructed samples located on a reference sample line at a distance of k+1 samples to the left and a reference sample line 1 sample above the current block 1710 as a reference sample, the present disclosure may perform more accurate planar prediction mode by using left reference sample L' adjacent to the current block 1710 and bottom-left reference sample BL' adjacent to the current block 1710. Here, L' and BL' may be reference samples included in the pre-reconstructed area and may be defined using various methods.

For example, L' may be the pre-reconstructed sample located at (-1, y), and BL' may be the pre-reconstructed sample located at (-1, H). Here, y may be the y-coordinate of the prediction sample to be predicted 1720. Additionally, H may be the height of the current block 1710. In another example, L' may be the pre-reconstructed sample L located at (-1-k, y). In other words, L and L' may be the same. Additionally, BL' may be the pre-reconstructed sample BL located at (-1-k, H). In other words, BL and BL' may be the same. In another example, L' and BL' may be defined based on the difference value d (= q-p) between the reference sample p located at (-k-1, -1) and the reference sample q located at (-1, -1). In other words, L' may be L+d, and BL' may be BL+d. Here, d may represent the distance between reference sample p and reference sample q. Alternatively, d may be the difference between the sample values of reference sample p and reference sample q.

As another example, L' and BL' may be generated by using horizontal planar mode with left reference sample L and top-right reference sample TR. In another example, L' and BL' may be generated by using vertical direction planar mode with reference sample q and bottom-left reference sample BL. In another example, BL' may be generated by using vertical planar mode with reference sample q and the reference sample located at (-k-1, H+1).

As another example, L' and BL' may be generated as the average of horizontal planar mode using left reference sample L and top-right reference sample TR and vertical planar mode using reference sample q and bottom-left reference sample BL. In other words, L' and BL' may be generated as the average of the sample value of sample generated by horizontal planar mode using left reference sample L and top-right reference sample TR and the sample value of sample generated by vertical planar mode using reference sample q and bottom-left reference sample BL.

As another example, BL' may be generated as the average of horizontal planar mode using left reference sample L and top-right reference sample TR and vertical planar mode using reference sample q and the reference sample at (-k-1, H+1). In other words, BL' may be generated as the average of the sample value of sample generated by horizontal planar mode using left reference sample L and top-right reference sample TR and the sample value of sample generated by vertical planar mode using reference sample q and the reference sample at (-k-1, H+1).

To generate prediction sample 1720 using L' and BL' in horizontal direction planar mode, Equation 15 below may be used. In Equation 15, $m_h$ may be a weight applied to L'. Additionally, $n_h$ may be a weight applied to TR. $m_h$ and $n_h$ may be calculated using Equation 16 below.

[Equation 15]

$$p_h(x, y) = m_h * L' + n_h * TR$$

[Equation 16]

$$(m_h, \ n_h) \ = \ (\frac{W-1-x}{W}, \ \frac{x+1}{W})$$

To generate the prediction sample 1720 with the vertical direction planar mode using L' and BL', Equation 17 below may be used. In Equation 17, $m_v$ may be a weight applied to T. Additionally, $n_v$ may be a weight applied to BL'. $m_v$ and

$n_v$ may be calculated using Equation 18 below.

[Equation 17]

$$p_v(x, y) = m_v * T + n_v * BL'$$

[Equation 18]

$$(m_v, \ n_v) \ = \ (\frac{H-1-y}{H}, \ \frac{y+1}{H})$$

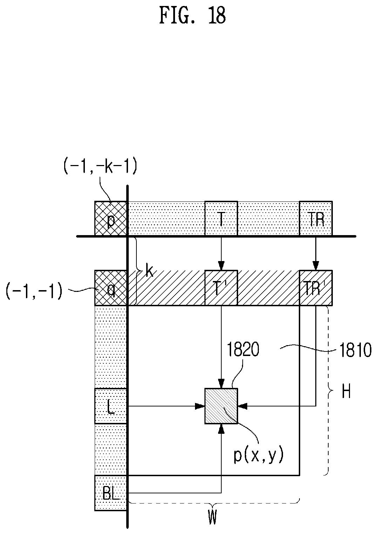

Figure 18 illustrates modified reference samples used for generating a prediction sample according to another embodiment of the present disclosure. Figure 18 defines the top-left position of the current block 1810 as (0,0), and the left and top areas of the current block 1810 may be pre-reconstructed areas. Referring to Figure 18, when using pre-reconstructed samples located on a reference sample line located one sample distance to the left and a reference line located k+1 sample distances above the current block 1810 as a reference sample, the present disclosure may perform a more accurate planar prediction mode using the top reference sample T' adjacent to the current block 1810 and the top-right reference sample TR' adjacent to the current block 1810. Here, T' and TR' may be reference samples included in the pre-reconstructed area and may be defined in various methods.

For example, T' may be a pre-reconstructed sample located at (x, -1), and TR' may be a pre-reconstructed sample located at (W, -1). Here, x may be the x-coordinate of the prediction sample to be predicted 1820, and W may be the width of the current block 1810. In another example, T' may be a pre-reconstructed sample T located at (x, -1-k). In other words, T' and T may be identical. Additionally, TR' may be a pre-reconstructed sample TR located at (W, -1-k). In other words, TR' and TR may be identical.

In another example, T' and TR' may be defined based on the difference value d (= q-p) between a reference sample p located at (-1, -k-1) and a reference sample q located at (-1, -1). In other words, T' may be T+d, and TR' may be TR+d. Here, d may represent the distance between reference sample p and reference sample q. Additionally, d may be the difference between the sample values of reference sample p and reference sample q.

In another example, T' and TR' may be generated using reference sample q and the top-right reference sample TR in the horizontal planar mode. In another example, T' and TR' may be generated using the top reference sample T and the bottom-left reference sample BL in the vertical planar mode. In another example, TR' may be generated using reference sample q and the reference sample located at (W+1, -k-1) in the horizontal planar mode.

In another example, T' and TR' may be generated as the average of the horizontal planar mode using reference sample q and the top-right reference sample TR, and the vertical planar mode using the top reference sample T and the bottom-left reference sample BL. In other words, T' and TR' may be generated as the average of the sample value of a sample generated in horizontal planar mode using reference sample q and top-right reference sample TR, and the sample value of a sample generated in vertical planar mode using top reference sample T and bottom-left reference sample BL.

As another example, TR' may be generated as the average of the horizontal planar mode using the reference sample q and the reference sample at the position (W+1, -k-1), and the vertical planar mode using the top reference sample T and the bottom-left reference sample BL. In other words, TR' may be generated as the average of the sample value of a sample generated in the horizontal planar mode using the reference sample q and the reference sample at the position (W+1, -k-1), and the sample value of a sample generated in the vertical planar mode using the top reference sample T and the bottom-left reference sample BL.

To generate a prediction sample 1820 in the horizontal direction planar mode using T' and TR', Equation 19 below may be used. In Equation 19, $m_h$ may be a weight applied to L. Additionally, $n_h$ may be a weight applied to TR'. $m_h$ and $n_h$ may be calculated using the Equation 20 below.

[Equation 19]

$$p_h(x, y) = m_h * L + n_h * TR'$$

[Equation 20]

$$(m_h, \ n_h) \ = \ (\frac{W-1-x}{W}, \ \frac{x+1}{W})$$

To generate a prediction sample 1820 in the vertical direction planar mode using T' and TR', the Equation 21 below may be used. In Equation 21, $m_v$ may be a weight applied to T'. Additionally, $n_v$ may be a weight applied to BL. $m_v$ and $n_v$ may be calculated using the following Equation 22.

[Equation 21]

$$p_v(x, y) = m_v * T' + n_v * BL$$

[Equation 22]

$$(m_v, \ n_v) \ = \ (\frac{H-1-y}{H}, \ \frac{y+1}{H})$$

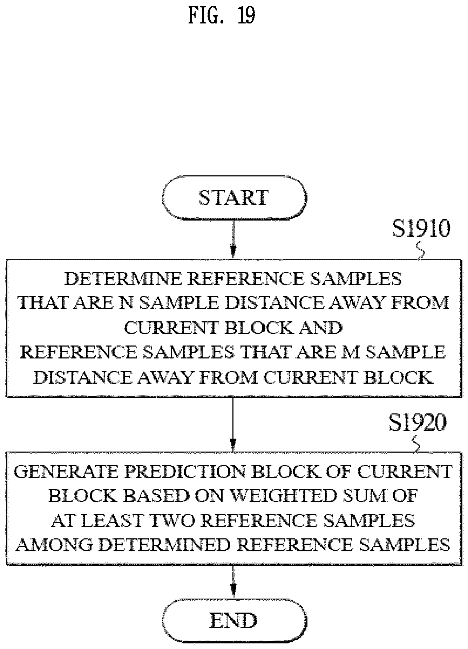

FIG. 19 is a flowchart of an image encoding/decoding method according to the present disclosure. Referring to FIG. 19, the video encoding apparatus (100) and/or the video decoding apparatus (200) may determine reference samples that are distance of n samples away from the current block and reference samples that are distance of m samples away from the current block S1910. In this case, the reference samples that are distance of n samples away may include top reference sample and top-right reference sample. Additionally, the reference samples that are distance of m samples away may include left reference sample and bottom-left reference sample. Here, n and m may be natural numbers.

The image encoding apparatus 100 and/or the image decoding apparatus 200 may generate a prediction block of the current block based on a weighted sum of at least two reference samples among determined reference samples S1920. The weight used in the weighted sum may be determined based on n and/or m. In other words, the weight may be determined based on the distance between the current block and the reference sample.

According to an embodiment of the present disclosure, the image encoding apparatus 100 and/or the image decoding apparatus 200 may generate a plurality of prediction blocks based on a weighted sum of at least two reference samples among determined reference samples. In this case, the final prediction block of the current block may be generated based on the generated prediction blocks. For example, a prediction block may be generated in the horizontal planar mode using a left reference sample and a top-right reference sample. Additionally, a prediction block may be generated in the vertical planar mode using a top reference sample and a bottom-left reference sample. The final prediction block may be generated based on a weighted sum of the prediction block generated in the horizontal planar mode and the prediction block generated in the vertical planar mode.

According to another embodiment of the present disclosure, the reference samples for generating a prediction block may include reference samples generated by modifying the reference samples, which is distance of n samples away, based on n. Additionally, the reference samples for generating a prediction block may include reference samples generated by modifying the reference samples, which is distance of m samples away, based on m.

For example, the top reference sample and the top-right reference sample may be modified based on n. The prediction block of the current block may be generated based on at least two of the modified top reference sample, the modified top-right reference sample, the left reference sample, or the bottom-left reference sample. As another example, the left reference sample and the bottom-left reference sample may be modified based on m. The prediction block of the current block may be generated based on at least two of the modified left reference sample, the modified bottom-left reference sample, the top reference sample, or the top-right reference sample. When a plurality of prediction blocks is generated, the final prediction block may be generated by a weighted sum of the plurality of prediction blocks.

According to another embodiment of the present disclosure, the reference samples for generating prediction blocks of the current block may be generated in the planar mode based on at least two of the top reference sample, the left reference sample, the top-right reference sample, the bottom-left reference sample, the top-left reference sample adjacent to the current block, the reference sample adjacent to the bottom-left reference sample, or the reference sample adjacent to the top-right reference sample.

According to another embodiment of the present disclosure, the reference samples for generating prediction blocks of the current block may further include a reference samples generated by averaging the sample values of a plurality of reference samples generated in the planar mode based on at least two of the top reference sample, the left reference sample, the top-right reference sample, the bottom-left reference sample, the top-left reference sample adjacent to the current block, the reference sample adjacent to the bottom-left reference sample, or the reference sample adjacent to the top-right reference sample. The planar mode described in the embodiments of the present disclosure may include the horizontal planar mode and the vertical planar mode.

## Embodiment 2

The present disclosure may relate to a method of blending a prediction block predicted in the planar mode with another prediction block when performing the MRL mode. When the planar prediction block used for blending is generated using pre-reconstructed reference sample close to the current block, a more accurate planar prediction block may be generated. In other words, the prediction accuracy of the planar prediction block generated using pre-reconstructed reference sample close to the current block may be high.

For example, when using the reference sample line 0 adjacent to the current block, a more accurate planar prediction block may be generated. Here, the planar prediction block may be a prediction block predicted in the planar mode. Additionally, by blending the generated planar prediction block with another prediction block, a new predictor may be generated, thereby coding efficiency may be improved.

According to an embodiment of the present disclosure, when the planar mode is derived in the Template-based Intra Mode Derivation (TIMD) mode or the Decoder-side Intra Mode Derivation (DIMD) mode and the MRL mode is used, blending may be performed between the prediction block predicted in the planar mode and another prediction block. Here, the reference sample line used to generate the prediction block using the MRL mode may be a reference sample line with an index greater than 0, such as reference sample lines with indices 1, 3, 5, 7, and 12.

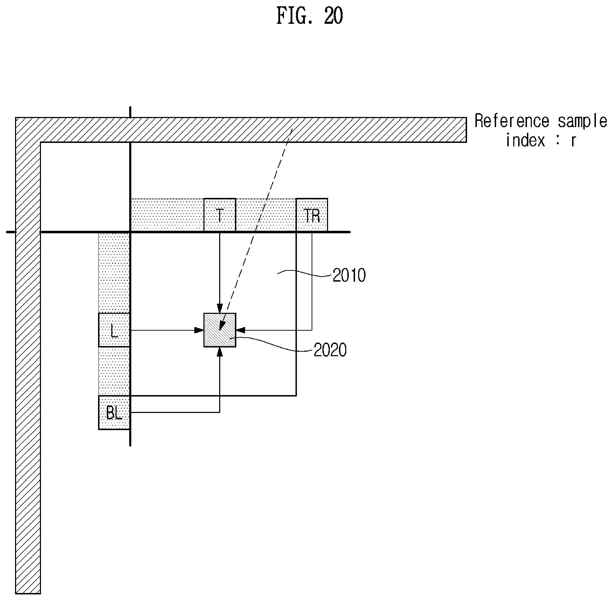

FIG. 20 is a diagram illustrating reference sample line for generating a prediction block according to the present disclosure. Referring to FIG. 20, to generate a prediction sample 2020 within the current block 2010, the image encoding apparatus 100 and/or the image decoding apparatus 200 may blend the prediction block predicted in the planar mode with the prediction block predicted using the reference sample line r.

According to an embodiment of the present disclosure, when the first mode derived in the TIMD mode or the DIMD mode is the planar mode, the prediction block may be generated using the reference sample line 0 regardless of the signaled MRL index. Here, the reference sample line 0 may refer to the first reference sample line adjacent to the current block. Additionally, the second mode derived in the TIMD mode or the DIMD mode may generate a prediction block using the reference sample line r. In other words, the prediction block may be generated in the second mode derived in the TIMD mode or the DIMD mode using the reference sample line r. Here, r may be determined by an explicitly signaled index. Accordingly, the final prediction block may be generated by blending the prediction block generated using the above-described first mode and the prediction block generated using the second mode.

According to another embodiment of the present disclosure, when the second mode of the TIMD mode or the DIMD mode is the planar mode, the prediction block may be generated using the reference sample line 0 regardless of the signaled MRL index. Additionally, the prediction block may be generated using the reference sample line r for the first mode derived in the TIMD mode or the DIMD mode. In other words, the prediction block may be generated based on the first mode derived in the TIMD mode or the DIMD mode using the reference sample line r. Here, r may be determined by an explicitly signaled index. Accordingly, the final prediction block may be generated by blending the prediction block generated using the above-described first mode and the prediction block generated using the second mode.

According to another embodiment of the present disclosure, when both the first mode and the second mode derived in the TIMD mode or the DIMD mode are the planar mode, the first prediction block may be generated in the planar mode using the reference sample line 0 regardless of the signaled MRL index. Additionally, the second prediction block may be generated in the planar mode using the reference sample line r. Here, r may be determined by an explicitly signaled index.

According to another embodiment of the present disclosure, when the first mode and the second mode derived in the TIMD mode or the DIMD mode are different from each other and one of them is the planar mode, the final prediction block may be generated by blending three prediction blocks. The first prediction block may be generated in the planar mode using the reference sample line 0 regardless of the signaled MRL index. The second prediction block may be generated in the planar mode using the reference sample line r. The third prediction block may be generated in a non-planar mode using the reference sample line r.

In various embodiments of the present disclosure, a weight used for blending prediction blocks may be the average between prediction blocks, may be a predefined weight, or may be determined through a selective combination of these methods. In other words, the weight may be determined based on at least one of the average of prediction values between prediction blocks or the predefined weight. Additionally, the weight may be determined based on whether the first mode of the TIMD mode or the DIMD mode is the planar mode. Alternatively, the weight may be determined based on whether the second mode of the TIMD mode or the DIMD mode is the planar mode. Alternatively, the weight may be determined based on whether the modes derived in the TIMD mode or the DIMD mode includes the planar mode. Alternatively, the weight may be determined through a selective combination of these methods.

According to an embodiment of the present disclosure, the planar prediction block used for blending may be a horizontal planar prediction block, a vertical planar prediction block, or the average of the horizontal planar prediction block and the vertical planar prediction block. Here, the planar prediction block may be a prediction block predicted in the planar mode. The vertical planar prediction block may be a prediction block predicted in the vertical planar mode. The horizontal planar prediction block may be a prediction block predicted in the horizontal planar mode.

**Embodiment 3**

The present disclosure may relate to a method of generating a sample in the planar mode in the top template area and the left template area of the current block when using the TIMD mode. In other words, the present disclosure may relate to a method of generating a prediction sample in the top template area or the left template area of the current block in the planar mode.

The TIMD mode may be a mode that uses the mode with the lowest template cost as the intra prediction mode of the current block after calculating the template cost between the prediction block predicted from the template area and the actual reconstructed sample. In this case, when the mode with the lowest template cost is the planar mode, to predict the sample at position (x, y) within the current block with a width of W and a height of H in the planar prediction mode, the bottom-left pre-reconstructed sample at position (-1, H), the top-right pre-reconstructed sample at position (W, -1), the top pre-reconstructed sample at position (x, -1), and/or the left pre-reconstructed sample at position (-1, y) may be used.

Accordingly, the present disclosure may obtain the template cost for the planar mode more accurately by performing the planar mode in the template area using a pre-reconstructed reference pixel which is close to the reference pixel used in the current block. In other words, to calculate a more accurate template cost in the template area, the planar mode may be performed using a pre-reconstructed reference sample which is close to the reference sample used in the current block.

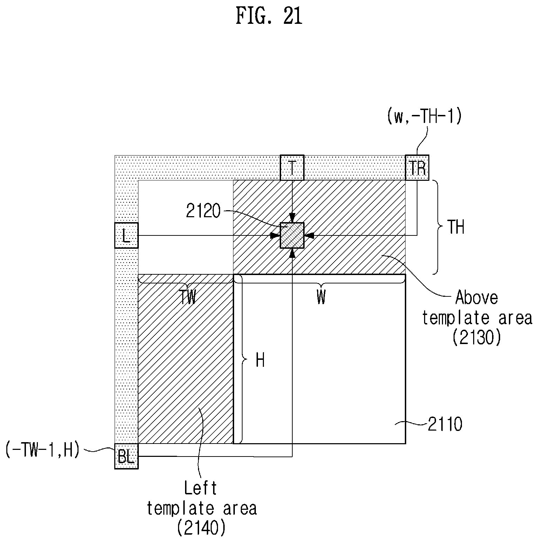

FIG. 21 is a diagram illustrating reference samples used for TIMD mode-based prediction block generation according to an embodiment of the present disclosure. FIG. 21 defines the top-left position of the current block 2110 as (0,0). Referring to FIG. 21, a prediction sample may be generated in the planar mode using the top-right reference sample TR of the top template area 2130 located at (W, -TH-1), the bottom-left reference sample BL of the left template area 2140 located at (-TH-1, H), the top reference sample T of the sample 2120 which is to be predicted within the template area, and/or the left reference sample L of the sample 2120 which is to be predicted within the template area. Here, TH may be the height of the top template area 2130. In this case, the prediction sample may be generated based on various equations used in Embodiment 1 described above.

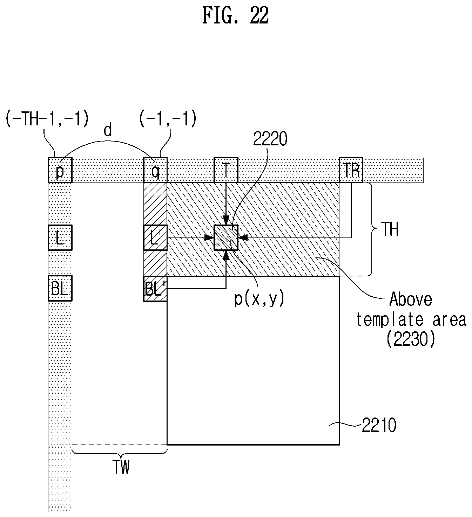

FIG. 22 is a diagram illustrating reference samples used for TIMD mode-based prediction block generation according to another embodiment of the present disclosure. FIG. 22 defines the top-left position of the top template area 2230 as (0,0). Referring to FIG. 22, an accurate planar prediction sample 2220 may be generated using the reference sample L' and BL', which are located adjacent to the top template area 2230 of the current block 2210.

In this case, L' and BL' may be defined in various ways. For example, L' may be a pre-reconstructed sample at position (-1, y). Additionally, BL' may be a pre-reconstructed sample at position (-1, TH). Here, TH may be the height of the top template area 2230. As another example, L' and BL' may be determined based on the difference value d (= p-q) between the reference sample p located at (-TW-1, -1) and the reference sample q located at (-1, -1) with respect to the top template area 2230. L' may be L+d, and BL' may be BL+d. Here, TW may be the width of the left template area or the distance between the current block and the left reference sample line. Additionally, d may be the distance between the reference sample p and the reference sample q, or d may be the difference between the sample values of the reference sample p and the reference sample q. The prediction sample 2220 may be generated using Equation 15 and/or Equation 17.

As another example, L' and BL' may be generated in the horizontal planar mode using the left reference sample L and the top-right reference sample TR. As another example, L' and BL' may be generated in vertical planar mode using the reference sample q and the bottom-left reference sample BL. As another example, BL' may be generated in vertical planar mode using the reference sample q and the sample at (-TW-1, TH+1).

As another example, L' and BL' may be generated as the average of the horizontal planar mode using the left reference sample L and the top-right reference sample TR, and the vertical planar mode using the reference sample q and the bottom-left reference sample BL. In other words, L' and BL' may be generated as the average of the sample value of a sample generated in the horizontal planar mode using the left reference sample L and the top-right reference sample TR, and the sample value of a sample generated in the vertical planar mode using the reference sample q and the bottom-left reference sample BL.

As another example, BL' may be generated as the average of the horizontal planar mode using the bottom-left reference sample BL and the top-right reference sample TR, and the vertical planar mode using the reference sample q and the reference sample at position (-TW-1, TH+1). In other words, BL' may be generated as the average of the sample value of a sample generated in the horizontal planar mode using the bottom-left reference sample BL and the top-right reference sample TR, and the sample value of a sample generated in the vertical planar mode using the reference sample q and the reference sample at position (-TW-1, TH+1).

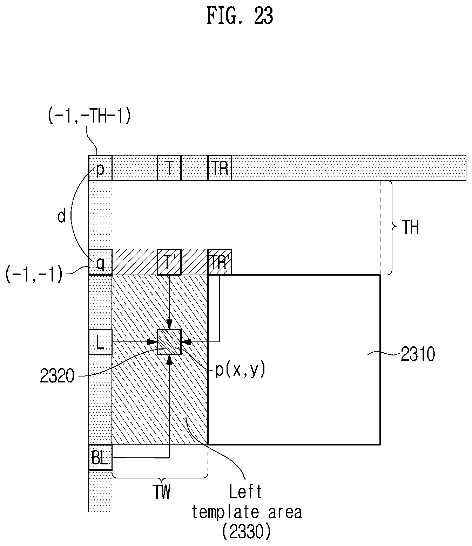

FIG. 23 is a diagram illustrating reference samples used for TIMD mode-based prediction block generation according to another embodiment of the present disclosure. FIG. 23 defines the top-left position of the left template area 2330 as (0,0). Referring to FIG. 23, an accurate planar prediction sample 2320 may be generated using the reference samples T' and TR', which are located adjacent to the left template area 2330 of the current block 2310.

T' and TR' may be defined in various ways. For example, T' may be a pre-reconstructed sample at position (x, -1). Additionally, TR' may be a pre-reconstructed sample at position (TW, -1). Here, TW may be the width of the left template area 2330. As another example, T' and TR' may be determined based on the difference value d (= p-q) between the reference sample p located at (-1, -TH-1) and the reference sample q located at (-1, -1) with respect to the left template area 2330. T' may be T+d, and TR' may be TR+d. Here, TH may be the height of the top template area or the distance between the current block and the top reference sample line. Additionally, d may be the distance between the reference sample p and the reference sample q, or the difference between the sample values of the reference sample p and the reference sample q. The prediction sample 2320 may be generated in the planar mode using T', TR', L, and BL and may be generated using Equation 19 and/or Equation 21.

As another example, T' and TR' may be generated in horizontal planar mode using the reference sample q and the top-right reference sample TR. As another example, T' and TR' may be generated in the vertical planar mode using the top reference sample T and the bottom-left reference sample BL. As another example, TR' may be generated in the horizontal planar mode using the reference sample q and the sample at position (TW+1, -TH-1).

As another example, T' and TR' may be generated as the average of the horizontal planar mode using the reference sample q and the top-right reference sample TR, and the vertical planar mode using the top reference sample T and the bottom-left reference sample BL. In other words, T' and TR' may be generated as the average of the sample value of a sample generated in the horizontal planar mode using the reference sample q and the top-right reference sample TR, and the sample value of a sample generated in the vertical planar mode using the top reference sample T and the bottom-left reference sample BL.

As another example, TR' may be generated as the average of the horizontal planar mode using the reference sample q and the sample at position (TW+1, -TH-1), and the vertical planar mode using the top reference sample T and the bottom-left reference sample BL. In other words, TR' may be generated as the average of the sample value of a sample generated in the horizontal planar mode using the reference sample q and the sample at position (TW+1, -TH-1), and the sample value of a sample generated in the vertical planar mode using the top reference sample T and the bottom-left reference sample BL.

The above-described embodiments may include the horizontal planar mode or the vertical planar mode as intra mode candidates for calculating the mode with the lowest template cost in the left and/or top template areas of the TIMD mode. Additionally, when the mode with the lowest template cost is the horizontal planar mode, the current block may be predicted in the horizontal planar mode. Alternatively, when the mode with the lowest template cost is the vertical planar mode, the current block may be predicted in the vertical planar mode.

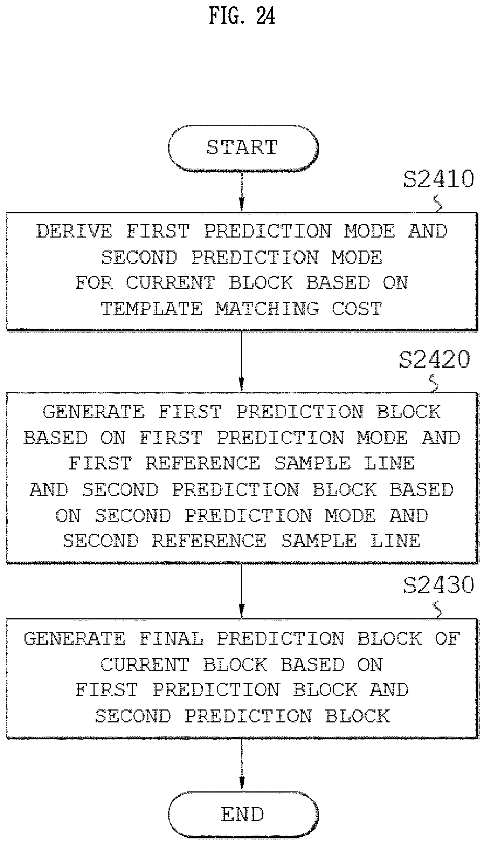

FIG. 24 is a flowchart of an image encoding/decoding method according to the present disclosure. Referring to FIG. 24, the image encoding apparatus 100 and/or the image decoding apparatus 200 may derive a first prediction mode and a second prediction mode for the current block based on the template matching cost S2410. In this case, the template matching cost calculated based on the first prediction mode may be less than the template matching cost calculated based on the second prediction mode.

The template matching cost may be calculated based on the prediction block resulting from predicting the template area of the current block in the planar mode. The top reference sample and the top-right reference sample used for predicting the template area may be obtained from the first reference sample line adjacent to the top template area, and the left reference sample and the bottom-left reference sample used for predicting the template area may be obtained from the first reference sample line adjacent to the left template area.

According to an embodiment of the present disclosure, the template area may include a top template area and a left template area. In this case, the bottom-left reference sample used for predicting the top template area may be the same as the bottom-left reference sample of the left template area, and the top-right reference sample used for predicting the left template area may be the same as the top-right reference sample of the top template area.

According to another embodiment of the present disclosure, the template area may include a top template area and a left template area. In this case, the bottom-left reference sample used for predicting the top template area may have the same y-coordinate as the bottom-left sample of the top template area, and the top-right reference sample used for predicting the left template area may have the same x-coordinate as the top-right sample of the left template area. The value of the left reference sample and the value of the bottom-left reference sample used for predicting the top template area may be modified based on the width of the left template area, and the value of the top reference sample and the value of the top-right reference sample used for predicting the left template area may be modified based on the height of the top template area.

The image encoding apparatus 100 and/or the image decoding apparatus 200 may generate a first prediction block based on a first prediction mode and a first reference sample line, and a second prediction block based on a second prediction mode and a second reference sample line S2420. Here, at least one of the first reference sample line and the second reference sample line may be determined based on whether the first prediction mode or the second prediction mode is a planar mode.

According to an embodiment of the present disclosure, when the first prediction mode is the planar mode, the first reference sample line may be determined as the first reference sample line adjacent to the current block, and the second reference sample line may be determined as the r-th reference sample line adjacent to the current block. According to another embodiment of the present disclosure, when the second prediction mode is a planar mode, the first reference sample line may be determined as the r-th reference sample line adjacent to the current block, and the second reference sample line may be determined as the first reference sample line adjacent to the current block.

The image encoding apparatus 100 and/or the image decoding apparatus 200 may generate a final prediction block of the current block based on the first prediction block and the second prediction block S2430. According to an embodiment of the present disclosure, when the first prediction mode and the second prediction mode include the planar mode and the non-planar mode, the final prediction block may be generated by performing a weighted sum of the first prediction block generated in the planar mode based on the first reference sample line adjacent to the current block, the second prediction block generated in the planar mode based on the r-th reference sample line adjacent to the current block, and the third prediction block generated in the non-planar mode based on the r-th reference sample line. The weighted sum according to the present disclosure may be performed based on the equations used in the above-described embodiments.

The exemplary methods of the present disclosure are described as a series of operations for clarity of explanation, but this is not intended to limit the order in which the steps are performed, and when necessary, each step may be performed simultaneously or in a different order. To implement the method according to the present disclosure, additional steps may be included in addition to the illustrated steps, some steps may be omitted while including the remaining steps, or some steps may be omitted while including additional steps.

In the present disclosure, the image encoding apparatus 100 or the image decoding apparatus 200 which performs a predetermined operation (step) may perform an operation (step) to check the execution conditions or situations of the corresponding operation (step). For example, when it is described that a predetermined operation is performed when a predetermined condition is satisfied, the image encoding apparatus 100 or the image decoding apparatus 200 may perform an operation to check whether the predetermined condition is satisfied before performing the predetermined operation.

The various embodiments of the present disclosure are not a listing of all possible combinations but are provided to illustrate representative aspects of the disclosure, and the elements described in the various embodiments may be applied independently or in combination with two or more elements.

Additionally, the various embodiments of the present disclosure may be implemented using hardware, firmware, software, or a combination thereof, etc. When implemented in hardware, the various embodiments may be implemented using one or more Application-Specific Integrated Circuits (ASICs), Digital Signal Processors (DSPs), Digital Signal Processing Devices (DSPDs), Programmable Logic Devices (PLDs), Field Programmable Gate Arrays (FPGAs), general-purpose processors, controllers, microcontrollers, or microprocessors.

Additionally, the image decoding apparatus 200 and the image encoding apparatus 100 to which the embodiments of the present disclosure are applied may be included in various devices such as a multimedia broadcasting transmission/reception device, a mobile communication terminal, a home cinema video device, a digital cinema video device, a surveillance camera, a video conferencing device, a real-time communication device such as a video communication device, a mobile streaming device, a storage medium, a camcorder, a video-on-demand (VoD) service providing device, an over-the-top (OTT) video device, an internet streaming service providing device, a three-dimensional (3D) video device, a video telephony device, and a medical video device, and may be used for processing video signals or data signals. For example, an over the top (OTT) video device may include a game console, a Blu-ray player, an internet-connected TV, a home theater system, a smartphone, a tablet PC, and a digital video recorder (DVR), etc.

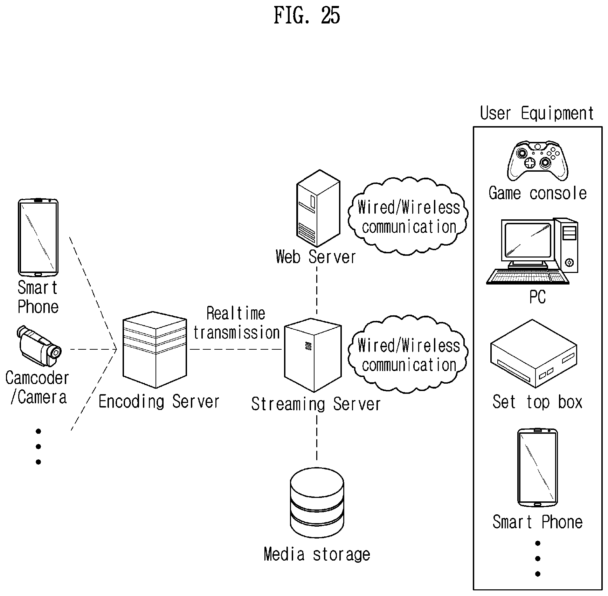

FIG. 25 shows an exemplary diagram of a content streaming system to which an embodiment of the present disclosure may be applied.

As shown in FIG. 25, the content streaming system to which an embodiment of the present disclosure is applied may broadly include an encoding server, a streaming server, a web server, a media storage, a user device, and a multimedia input device.

The encoding server compresses content input from multimedia input devices such as a smartphone, camera, or camcorder into digital data, generating a bitstream and transmitting it to the streaming server. As another example, when multimedia input devices such as a smartphone, camera, or camcorder directly generate a bitstream, the encoding server may be omitted.

The bitstream may be generated by the video encoding method and/or the image encoding apparatus 100 to which an embodiment of the present disclosure is applied, and the streaming server may temporarily store the bitstream during the process of transmitting or receiving the bitstream.

The streaming server may transmit multimedia data to a user device based on a user request through the web server, and the web server may serve as an intermediary that informs user of available service. When a user requests a desired service from the web server, the web server may send the request to the streaming server, and the streaming server may transmit the multimedia data to the user. In this case, the content streaming system may include a separate control server, and in this case, a control server may function to control command/response exchanges between devices within the content streaming system.

The streaming server may receive content from a media storage and/or an encoding server. For example, when receiving content from the encoding server, the content may be received in real time. In this case, to provide a seamless streaming service, the streaming server may store the bitstream for a certain period of time.

Examples of the user device may include a mobile phone, a smartphone, a laptop computer, a digital broadcasting terminal, a personal digital assistant (PDA), a portable multimedia player (PMP), a navigation device, a slate PC, a tablet PC, an ultrabook, a wearable device (i.e., a smartwatch, a smart glass, a head-mounted display (HMD)), a digital TV, a desktop computer, and digital signage.

Each server within the content streaming system may be operated as a distributed server, in which case the data received by each server may be processed in a distributed manner.

The range of the present disclosure includes software or machine-executable instructions (i.e., an operating system, an application, firmware, a program, etc.) that enable operations according to the methods of various embodiments to be executed on a device or computer, and a non-transitory computer-readable medium in which such software or instructions are stored and executable on a device or computer.

[Industrial Applicability]

The embodiments of the present disclosure may be used for encoding/decoding an image.

**Claims**

1. An image decoding method, performed by an image decoding apparatus, comprising:

    determining reference samples located at an n-sample distance from a current block and reference samples located at an m-sample distance from the current block, wherein the reference samples located at the n-sample distance include a top reference sample and a top-right reference sample, and the reference samples located at the m-sample distance include a left reference sample and a bottom-left reference sample; and
    generating a prediction block of the current block based on a weighted sum of at least two of reference samples among the determined reference samples,
    wherein a weight used in the weighted sum is determined based on the n or the m, and
    wherein the n and the m are natural numbers.

2. The image decoding method of claim 1, wherein generating the prediction block of the current block includes:

    generating prediction blocks of the current block based on the weighted sum of the reference samples; and
    generating a final prediction block of the current block based on the prediction blocks.

3. The image decoding method of claim 2, wherein the reference samples further include reference samples generated by modifying the reference samples located at the n-sample distance based on the n and reference samples generated by modifying the reference samples located at the m-sample distance based on the m.

4. The image decoding method of claim 2, wherein the reference samples further include reference samples generated in a planar mode based on at least two of the top reference sample, the left reference sample, the top-right reference sample, the bottom-left reference sample, a top-left reference sample adjacent to the current block, a reference sample adjacent to the bottom-left reference sample, or a reference sample adjacent to the top-right reference sample, and
wherein the planar mode includes a horizontal planar mode and a vertical planar mode.

5. The image decoding method of claim 2, wherein, the reference samples further include reference samples generated by averaging sample values of multiple reference samples generated in a planar mode based on at least two of the top reference sample, the left reference sample, the top-right reference sample, the bottom-left reference sample, a top-left reference sample adjacent to the current block, a reference sample adjacent to the bottom-left reference sample, or a reference sample adjacent to the top-right reference sample, and
wherein the planar mode includes a horizontal planar mode and a vertical planar mode.

6. An image decoding method, performed by an image decoding apparatus, comprising:

deriving a first prediction mode and a second prediction mode for a current block based on a template matching cost, wherein a template matching cost calculated based on the first prediction mode is less than a template matching cost calculated based on the second prediction mode;

generating a first prediction block based on the first prediction mode and a first reference sample line, and generating a second prediction block based on the second prediction mode and a second reference sample line; and

generating a final prediction block of the current block based on the first prediction block and the second prediction block,

wherein at least one of the first reference sample line or the second reference sample line is determined based on whether the first prediction mode or the second prediction mode is a planar mode.

7. The image decoding method of claim 6, wherein based on the first prediction mode being a planar mode, the first reference sample line is determined as a first reference sample line adjacent to the current block, and the second reference sample line is determined as a r-th reference sample line adjacent to the current block.

8. The image decoding method of claim 6, wherein based on the second prediction mode being a planar mode, the first reference sample line is determined as a r-th reference sample line adjacent to the current block, and the second reference sample line is determined as a first reference sample line adjacent to the current block.

9. The image decoding method of claim 6, wherein based on the first prediction mode and the second prediction mode including a planar mode and a non-planar mode, the final prediction block is generated by performing a weighted sum of a first prediction block generated in the planar mode based on a first reference sample line adjacent to the current block, a second prediction block generated in the planar mode based on a r-th reference sample line adjacent to the current block, and a third prediction block generated in the non-planar mode based on the r-th reference sample line.

10. The image decoding method of claim 6, wherein the template matching cost is calculated based on a prediction block resulting from predicting a template area of the current block in the planar mode,

wherein a top reference sample and a top-right reference sample used for prediction of the template area are obtained from a first reference sample line adjacent to a top template area, and

wherein a left reference sample and a bottom-left reference sample used for prediction of the template area are obtained from a first reference sample line adjacent to a left template area.

11. The image decoding method of claim 10, wherein the template area includes a top template area and a left template area,

wherein a bottom-left reference sample used for prediction of the top template area is identical to a bottom-left reference sample of the left template area, and

wherein a top-right reference sample used for prediction of the left template area is identical to a top-right reference sample of the top template area.

12. The image decoding method of claim 10, wherein the template area includes a top template area and a left template area,

wherein a bottom-left reference sample used for prediction of the top template area has an identical y-coordinate as a bottom-left sample of the top template area, and

wherein a top-right reference sample used for prediction of the left template area has an identical x-coordinate as a top-right sample of the left template area.

13. The image decoding method of claim 12, wherein a value of a left reference sample and a value of a bottom-left reference sample used for prediction of the top template area are modified based on a width of the left template area, and

wherein a value of a top reference sample and a value of a top-right reference sample used for prediction of the left template area are modified based on a height of the top template area.

14. An image encoding method performed by an image encoding apparatus, comprising:

deriving a first prediction mode and a second prediction mode for a current block based on a template matching cost;

generating a first prediction block based on the first prediction mode and a first reference sample line;

generating a second prediction block based on the second prediction mode and a second reference sample line; and

generating a final prediction block of the current block based on the first prediction block and the second prediction block,

wherein at least one of the first reference sample line or the second reference sample line is determined based on whether the first prediction mode or the second prediction mode is a planar mode.

15. A computer readable recording medium storing a bitstream generated by the image encoding method of Claim 14.

16. A method for transmitting a bitstream generated by an image encoding method,
   wherein the image encoding method comprises:

   deriving a first prediction mode and a second prediction mode for a current block based on a template matching cost;

   generating a first prediction block based on the first prediction mode and a first reference sample line;

   generating a second prediction block based on the second prediction mode and a second reference sample line; and

   generating a final prediction block of the current block based on the first prediction block and the second prediction block,

   wherein at least one of the first reference sample line or the second reference sample line is determined based on whether the first prediction mode or the second prediction mode is a planar mode.

FIG.1

VIDEO SOURCE
GENERATOR

ENCODER

TRANSMITTER

RENDERER

DECODER

RECEIVER

# FIG.2

**FIG.3**

FIG.4

START

S410

PERFORM PREDICTION
(DETERMINE INTRA PREDICTION
MODE/TYPE, DERIVE NEIGHBORING
REFERENCE SAMPLES, GENERATE
PREDICTION SAMPLES)

S420

RESIDUAL PROCESS
(DERIVE RESIDUAL SAMPLES
BASED ON PREDICTION SAMPLES)

S430

ENCODE IMAGE/VIDEO INFORMATION
INCLUDING PREDICTION INFORMATION AND
RESIDUAL INFORMATION

END

# FIG. 5

185

186

INTRA PREDICTION
MODE/TYPE DETERMINER

ORIGINAL PICTURE

187

REFERENCE SAMPLE
DERIVER

RECONSTRUCTED
REFERENCE AREA

188

IN CURRENT PICTURE

PREDICTION SAMPLE
DERIVER

INTRA PREDICTION
MODE/TYPE INFORMATION

PREDICTION SAMPLE(S)

INTRA PREDICTOR

## FIG. 6

START

S610

DETERMINE INTRA PREDICTION MODE/TYPE
OF CURRENT BLOCK BASED ON
RECEIVED PREDICTION INFORMATION

S620

DERIVE NEIGHBORING REFERENCE SAMPLES

S630

PERFORM PREDICTION
(GENERATE PREDICTION SAMPLES)

S640

DERIVE RESIDUAL SAMPLES BASED ON
RESIDUAL INFORMATION

S650

GENERATE RECONSTRUCTED
BLOCK/PICTURE
BASED ON PREDICTION SAMPLES
AND RESIDUAL SAMPLES

END

# FIG. 7

265

266

INTRA PREDICTION
MODE/TYPE DETERMINER

INTRA PREDICTION
MODE/TYPE INFORMATION →

267

REFERENCE SAMPLE
DERIVER

→ PREDICTION SAMPLE

RECONSTRUCTED
REFERENCE AREA

IN CURRENT PICTURE →

268

PREDICTION SAMPLE
DERIVER

INTRA PREDICTOR

FIG. 8

FIG. 9

FIG. 10

# FIG. 11

4 x 4 block

Other block

1110

Window

Window

ampl(ipm)

ipm

ampl(ipm)

ipm

EP 4 593 377 A1

**FIG. 12**

1210

$ampl(ipm)$ — $M_1$ — $M_2$ — ipm

1260

$$\omega_1 = \frac{43}{64} \times \frac{ampl(M_1)}{ampl(M_1) + ampl(M_2)}$$

$$\omega_2 = \frac{43}{64} \times \frac{ampl(M_2)}{ampl(M_1) + ampl(M_2)}$$

$$\omega_3 = \frac{21}{64}$$

1220 — $\text{Pred}_1$

1230 — $\text{Pred}_2$

1240 — $\text{Pred}_3$

Predict with $M_1$

Predict with $M_2$

Planar

Reference pixels

Fusion

$\omega_1$  $\omega_2$  $\omega_3$

Predictor block — 1250

$$\sum_{i=1}^{3} \omega_i \times \text{Pred}_i$$

FIG. 13

FIG. 14

FIG. 15

FIG. 16

FIG. 17

FIG. 18

FIG. 19

```
                    ┌──────────────┐
                    │    START     │
                    └──────┬───────┘
                           │                    S1910
                           ▼
         ┌─────────────────────────────────────┐
         │      DETERMINE REFERENCE SAMPLES     │
         │  THAT ARE N SAMPLE DISTANCE AWAY FROM│
         │         CURRENT BLOCK AND            │
         │  REFERENCE SAMPLES THAT ARE M SAMPLE │
         │  DISTANCE AWAY FROM CURRENT BLOCK    │
         └──────────────────┬──────────────────┘
                            │                   S1920
                            ▼
         ┌─────────────────────────────────────┐
         │  GENERATE PREDICTION BLOCK OF CURRENT│
         │    BLOCK BASED ON WEIGHTED SUM OF    │
         │     AT LEAST TWO REFERENCE SAMPLES   │
         │  AMONG DETERMINED REFERENCE SAMPLES  │
         └──────────────────┬──────────────────┘
                            │
                            ▼
                    ┌──────────────┐
                    │     END      │
                    └──────────────┘
```

FIG. 20

FIG. 21

FIG. 22

FIG. 23

# FIG. 24

```
            ┌─────────────┐
            │    START    │
            └─────────────┘
                   │
                   ▼                          S2410
┌──────────────────────────────────────┐
│   DERIVE FIRST PREDICTION MODE AND    │
│        SECOND PREDICTION MODE         │
│      FOR CURRENT BLOCK BASED ON       │
│       TEMPLATE MATCHING COST          │
└──────────────────────────────────────┘
                   │
                   ▼                          S2420
┌──────────────────────────────────────┐
│    GENERATE FIRST PREDICTION BLOCK    │
│   BASED ON FIRST PREDICTION MODE AND  │
│       FIRST REFERENCE SAMPLE LINE     │
│   AND SECOND PREDICTION BLOCK BASED   │
│     ON SECOND PREDICTION MODE AND     │
│     SECOND REFERENCE SAMPLE LINE      │
└──────────────────────────────────────┘
                   │
                   ▼                          S2430
┌──────────────────────────────────────┐
│  GENERATE FINAL PREDICTION BLOCK OF   │
│        CURRENT BLOCK BASED ON         │
│      FIRST PREDICTION BLOCK AND       │
│        SECOND PREDICTION BLOCK        │
└──────────────────────────────────────┘
                   │
                   ▼
            ┌─────────────┐
            │     END     │
            └─────────────┘
```

FIG. 25

## INTERNATIONAL SEARCH REPORT

International application No.

**PCT/KR2023/014265**

### A. CLASSIFICATION OF SUBJECT MATTER

**H04N 19/11**(2014.01)i; **H04N 19/593**(2014.01)i; **H04N 19/132**(2014.01)i; **H04N 19/105**(2014.01)i; **H04N 19/70**(2014.01)i; **H04N 19/186**(2014.01)i

According to International Patent Classification (IPC) or to both national classification and IPC

### B. FIELDS SEARCHED

Minimum documentation searched (classification system followed by classification symbols)

H04N 19/11(2014.01); H04N 19/103(2014.01); H04N 19/105(2014.01); H04N 19/159(2014.01); H04N 19/593(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 참조(reference), 샘플(sample), 라인(line), 가중치 (weight), 인트라(intra), 예측(predict)

### C. DOCUMENTS CONSIDERED TO BE RELEVANT

| Category* | Citation of document, with indication, where appropriate, of the relevant passages | Relevant to claim No. |
|---|---|---|
| Y | KR 10-2416257 B1 (KT CORPORATION) 04 July 2022 (2022-07-04)<br>See paragraphs [0002], [0016]-[0017], [0047]-[0048], [0057], [0067], [0078], [0101], [0103], [0149], [0152], [0215], [0229], [0318], [0337] and [0339]; claim 1; and figure 2. | 1-16 |
| Y | XU, Luhang et al. Non-EE2: Combination of JVET-AA0120 and JVET-AA0137. JVET-AA0246-v1, Joint Video Experts Team (JVET) of ITU-T SG 16 WP 3 and ISO/IEC JTC 1/SC 29, 27th Meeting, by teleconference. pp. 1-4, 18 July 2022.<br>See pages 1-2; and figure 1. | 1-16 |
| Y | LI, Xinwei et al. Non-EE2: On planar horizontal mode and planar vertical mode. JVET-AA0104-v2, Joint Video Experts Team (JVET) of ITU-T SG 16 WP 3 and ISO/IEC JTC 1/SC 29, 27th Meeting, by teleconference. pp. 1-3, 18 July 2022.<br>See pages 1-2; and figure 1. | 4-5 |
| A | KR 10-2022-0016937 A (INDUSTRY ACADEMY COOPERATION FOUNDATION OF SEJONG UNIVERSITY) 10 February 2022 (2022-02-10)<br>See claims 1-3. | 1-16 |

☑ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **28 December 2023** | **28 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/014265** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2021-0134267 A (SK TELECOM CO., LTD.) 09 November 2021 (2021-11-09) <br> See claims 5-6. | 1-16 |

## INTERNATIONAL SEARCH REPORT
### Information on patent family members

International application No.

**PCT/KR2023/014265**

| Patent document cited in search report | | | Publication date (day/month/year) | Patent family member(s) | | | Publication date (day/month/year) |
|---|---|---|---|---|---|---|---|
| KR | 10-2416257 | B1 | 04 July 2022 | CN | 116684581 | A | 01 September 2023 |
| | | | | EP | 3496399 | A1 | 12 June 2019 |
| | | | | KR | 10-2018-0015598 | A | 13 February 2018 |
| | | | | US | 11438582 | B2 | 06 September 2022 |
| | | | | US | 2022-0368896 | A1 | 17 November 2022 |
| | | | | WO | 2018-026219 | A1 | 08 February 2018 |
| KR | 10-2022-0016937 | A | 10 February 2022 | KR | 10-2018-0041575 | A | 24 April 2018 |
| | | | | KR | 10-2021-0058782 | A | 24 May 2021 |
| | | | | KR | 10-2357282 | B1 | 28 January 2022 |
| KR | 10-2021-0134267 | A | 09 November 2021 | CN | 109863749 | A | 07 June 2019 |
| | | | | CN | 109863749 | B | 05 September 2023 |
| | | | | KR | 10-2018-0043149 | A | 27 April 2018 |
| | | | | KR | 10-2021-0131972 | A | 03 November 2021 |
| | | | | US | 10979708 | B2 | 13 April 2021 |
| | | | | US | 11381815 | B2 | 05 July 2022 |
| | | | | US | 2019-0273919 | A1 | 05 September 2019 |
| | | | | US | 2021-0211653 | A1 | 08 July 2021 |

Form PCT/ISA/210 (patent family annex) (July 2022)